# EUROPEAN PATENT APPLICATION

(11) **EP 4 675 798 A1**
(43) Date of publication of application: **07.01.2026**
(21) Application number: 24855250.7
(22) Date of filing: 11.03.2024
(51) Int. Cl.: H01M 50/244

(54) **BATTERY CELL, BATTERY AND ELECTRICAL APPARATUS**

(30) Priority: 23.08.2023 CN 202322279131 U
(71) Applicant: Contemporary Amperex Technology Co., Limited, Ningde, Fujian 352100 (CN)
(72) Inventor: CHEN, Congsheng, Ningde, Fujian 352100 (CN); LIN, Wenfa, Ningde, Fujian 352100 (CN); LUO, Weijie, Ningde, Fujian 352100 (CN); HUANG, Biao, Ningde, Fujian 352100 (CN)
(74) Representative: Lorenz Seidler Gossel Part. mbB
(86) International application number: PCT/CN2024/080953
(87) International publication number: WO 2025/039519

(57) **Abstract**

A battery cell, a battery, and an electric device are provided, and relate to the field of battery technologies. The battery cell includes a housing and a protruding structure, where the housing defines an accommodating cavity and includes a first housing wall, the protruding structure is disposed on the first housing wall and at least partially protrudes to a side of an outer surface of the first housing wall away from the accommodating cavity, a liquid filling hole is formed in the protruding structure, two ends of the liquid filling hole are an outer hole end and an inner hole end, respectively, which are sequentially disposed along a direction from the outer surface to an inner surface of the first housing wall, and the inner hole end is located on a side of the inner surface of the first housing wall away from the accommodating cavity.

## Description

### CROSS-REFERENCE TO RELATED APPLICATIONS

The present application is based on and claims priority to Chinese Patent Application No. 202322279131.5, filed on August 23, 2023, the entire disclosure of which is incorporated herein by reference.

### TECHNICAL FIELD

The present application relates to the field of battery technologies, and in particular, to a battery cell, a battery, and an electric device.

### BACKGROUND

In recent years, new energy vehicles have been developed with a great leap. In the field of electric vehicles, power batteries play an irreplaceably important role as a power source of the electric vehicle. A power battery includes several battery cells. However, the battery cells need to be improved in terms of use performance and manufacturability.

### SUMMARY

Provided in the embodiments of the present application are a battery cell, a battery, and an electric device. The use performance and manufacturability of the battery cell can be improved.

In a first aspect, provided in the embodiments of the present application is a battery cell, including a housing and a protruding structure, where the housing defines an accommodating cavity and includes a first housing wall, a side surface of the first housing wall facing the accommodating cavity is an inner surface, a side surface of the first housing wall away from the accommodating cavity is an outer surface, the protruding structure is disposed on the first housing wall and at least partially protrudes to a side of the outer surface of the first housing wall away from the accommodating cavity, a liquid filling hole is formed in the protruding structure, two ends of the liquid filling hole are an outer hole end and an inner hole end respectively, the outer hole end and the inner hole end are sequentially disposed along a direction from the outer surface to the inner surface of the first housing wall, and the inner hole end is located on a side of the inner surface of the first housing wall away from the accommodating cavity.

In the above technical solution, the protruding structure is disposed on the first housing wall, and the liquid filling hole is formed in the protruding structure, so that the inner hole end of the liquid filling hole extends beyond the inner surface of the first housing wall towards an outer side to increase the height of the liquid filling hole, and an additional accommodating space is formed on an inner side of the liquid filling hole to play a buffering role. In this way, during manufacturing, handling or use of the battery cell, if an electrolyte tends to overflow, the electrolyte that is about to overflow can enter the accommodating space. Thus, the probability that the electrolyte overflows from the liquid filling hole is reduced, which is beneficial to improving the problem that the overflowing electrolyte contaminates the first housing wall and parts on the first housing wall. Consequently, during manufacturing, it is beneficial to increasing the liquid filling speed to improve the manufacturability of the battery cell, and it is beneficial to improving the reliability of the battery cell. Moreover, because the height of the liquid filling hole is increased, when the height of the injected electrolyte reaches the inner hole end of the liquid filling hole, the injection height of the electrolyte is higher than the inner surface of the first housing wall, thereby increasing the total injection amount of the electrolyte in the housing, and prolonging the cycle life of the battery cell. It can be understood that, during use of the battery cell, the consumption of the electrolyte causes the electrolyte inside the battery cell to decrease, which affects the service life of the battery cell, and increasing the total injection amount of the electrolyte is beneficial to prolonging the service life of the battery cell. In addition, during use of the battery cell, the electrolyte generates gas after participating in a reaction, resulting in an increase in pressure in the housing, and when the pressure reaches a certain level, there is a reliability problem. When gas is formed in the housing, the additional accommodating space on the inner side of the liquid filling hole can play a role in buffering the gas, thereby improving the reliability problem caused by the increase in pressure, and enhancing the use reliability of the battery cell.

In some embodiments, the inner hole end is located on a side of the outer surface of the first housing wall away from the accommodating cavity.

In the above technical solution, the height of the inner hole end of the liquid filling hole can be further increased, and more accommodating spaces are formed on the inner side of the liquid filling hole. In this way, during manufacturing, handling, or use of the battery cell, the probability that the electrolyte overflows from the liquid filling hole can be further reduced to improve the reliability and manufacturability of the battery cell. Moreover, the injection height of the electrolyte may be higher than the outer surface of the first housing wall, which is beneficial to further increasing the total injection amount of the electrolyte in the housing, thereby prolonging the cycle life of the battery cell. In addition, during use of the battery cell, the electrolyte generates gas after participating in a reaction, and the gas can be more buffered by the accommodating space, so that the reliability problem caused by the increase in pressure can be improved more effectively, and the use reliability of the battery cell can be further enhanced.

In some embodiments, the protruding structure includes a post structure, where the post structure is disposed on the first housing wall, and the liquid filling hole is formed in the post structure.

In the above technical solution, the liquid filling hole is formed in the post structure, so that the electrolyte can be injected from the post structure. In this way, the liquid filling hole does not need to be separately formed in the first housing wall, so the liquid filling hole does not occupy the space of the first housing wall, and the post structure does not need to be made small in size to avoid the liquid filling hole. Thus, an area of the post structure can be increased without increasing the size of the first housing wall. Increasing the current-carrying area of the post structure is beneficial to reducing the current-carrying resistance, improving the current-carrying efficiency, etc. Moreover, increasing the area of the post structure is also beneficial to the assembly connection between the post structure and the first housing wall. In addition, since it is not necessary to increase the size of the first housing wall in order to increase the area of the post structure, the miniaturization and light weight of the first housing wall can be achieved. Moreover, there is no need to perform special processing on the first housing wall to form the liquid filling hole in the first housing wall, thereby reducing the structural complexity and processing difficulty of the first housing wall. Further, it is not necessary to partially thicken the first housing wall in order to weld a sealing nail on the first housing wall, so that the structure and processing of the first housing wall can be further simplified; and it is also not necessary to thicken the first housing wall as a whole in order to weld the sealing nail on the first housing wall, which is beneficial to meeting the lightweight and thinness requirements of the first housing wall, to increasing the energy density of the battery cell, and to reducing the weight and material cost of the first housing wall. Furthermore, the liquid filling hole is formed in the post structure, so that the manufacturing and processing of the liquid filling hole can be facilitated, the size, shape, etc. of the liquid filling hole can easily meet the design requirements and application requirements, the processing difficulty of the liquid filling hole can be lowered, and the processing cost of the liquid filling hole can be reduced.

In some embodiments, the post structure includes a post body and a post cover plate, where the post body is disposed on the first housing wall, the post cover plate covers the post body, a communication channel communicating with the accommodating cavity is formed in the post body, and the liquid filling hole is formed in the post cover plate and communicates with the communication channel.

In the above technical solution, the liquid filling hole is formed in the post cover plate, and the communication channel is formed in the post body, so that a liquid filling path can be extended to a certain extent, a buffering effect in liquid filling can be achieved to a certain extent, and the possibility of splashing or overflowing of the electrolyte can be reduced when the battery cell is filled with the electrolyte or works. Moreover, the liquid filling hole is formed in the post cover plate, and a side of the post cover plate close to the accommodating cavity is further provided with the post body, so even if the sealing nail is disposed at the liquid filling hole, a lower plastic structure is separated from the sealing nail by the post body. Thus, the lower plastic structure does not need to be thickened to ensure the insulation at the sealing nail, and the lower plastic structure does not need to be thickened to avoid the interference between the sealing nail and a battery core assembly for a long time. Consequently, the lower plastic structure can be thinned to reduce the material cost, and the space occupied by the lower plastic structure in the accommodating cavity can be reduced to increase the energy density of the battery cell.

In some embodiments, the liquid filling hole is formed in a post cover plate of a negative electrode, and the post cover plate of the negative electrode and a post body of the negative electrode are made of a same material.

In the above technical solution, when the liquid filling hole is formed in the post cover plate of the negative electrode, the electrolyte flows to a welding joint between the post cover plate of the negative electrode and the post body of the negative electrode. Since the welding joint is usually a combination of the same material, the welding j oint is not easily corroded, which is beneficial to improving the reliability of connection between the post cover plate and the post body.

In some embodiments, the post cover plate includes a first cover plate portion and a second cover plate portion, where the first cover plate portion is connected to the post body, the first cover plate portion and the post body are made of a same material, the second cover plate portion is connected to the first cover plate portion, and the liquid filling hole is formed in the first cover plate portion or the second cover plate portion.

In the above technical solution, when the liquid filling hole is formed in the post cover plate made of a composite material and the first cover plate portion and the post body are made of the same material, the electrolyte flows to a welding joint between the first cover plate portion and the post body. Since the welding joint is a combination of the same material, the welding joint is not easily corroded, which is beneficial to improving the reliability of connection between the post cover plate and the post body.

In some embodiments, the communication channel includes a first accommodating groove and a liquid passing hole, where the first accommodating groove is open in a direction of the post cover plate to communicate with the liquid filling hole, and the liquid passing hole penetrates through a groove wall of the first accommodating groove and communicates the first accommodating groove with the accommodating cavity.

In the above technical solution, since the communication channel includes the first accommodating groove formed in the post body and the first accommodating groove can play a role in buffering the electrolyte, the problem of splashing, overflowing, or the like of the electrolyte can be improved when the battery cell is filled with the electrolyte or works. Moreover, when the electrolyte is injected, since the first accommodating groove can buffer the electrolyte, the injection efficiency of the electrolyte can be improved, and the side groove wall of the first accommodating groove can block the electrolyte from splashing to a certain extent, thereby reducing the contamination of the electrolyte to the outside.

In some embodiments, a groove opening of the first accommodating groove is located on a side of the first accommodating groove away from the accommodating cavity, and the liquid passing hole is formed in a side of the first accommodating groove close to the accommodating cavity and penetrates through a side groove wall of the first accommodating groove close to the accommodating cavity.

In the above technical solution, the first accommodating groove is equivalent to a recessed structure, so that the liquid passing hole is away from the groove opening of the first accommodating groove and is relatively far away from a joint between the post cover plate and the post body, and when the electrolyte overflows from the liquid passing hole, the overflowing electrolyte is less likely to contact the joint between the post cover plate and the post body, which can reduce the corrosion and contamination of the joint, etc.

In some embodiments, at least part of the post cover plate is embedded in the first accommodating groove.

In the above technical solution, since the first accommodating groove is used as a part of the communication channel, it indicates that a cavity is formed between the post cover plate and the groove wall of the first accommodating groove. In this way, while the post cover plate occupies the space in the first accommodating groove, it is ensured that there is also a space in the first accommodating groove for the electrolyte to flow, so that the electrolyte injected from the liquid filling hole of the post cover plate can enter the liquid passing hole through the cavity, thereby meeting the liquid filling requirements. Moreover, the cavity can also play a role in buffering the electrolyte, thereby improving the problem of splashing, overflowing, or the like of the electrolyte. In addition, during use of the battery cell, the cavity may be used to buffer the gas generated in the battery cell or the electrolyte overflowing from the accommodating cavity, thereby helping improve the working reliability of the battery cell; and during production of the battery cell, the cavity may also buffer the injected electrolyte, thereby improving the overflowing of the electrolyte, and raising the liquid filling efficiency. Furthermore, at least part of the post cover plate is embedded in the first accommodating groove, which can reduce the space occupied by the post cover plate outside the post body, improving structural compactness.

In some embodiments, an edge of the post cover plate is provided with a lap joint portion, and the lap joint portion laps on a side of the post body away from the accommodating cavity.

In the above technical solution, the fit and connection between the post cover plate and the post body are facilitated, and the height of the cavity between the post cover plate and the groove wall of the first accommodating groove is easily controlled, so that the volume of the cavity meets the design requirements.

In some embodiments, a side surface of the post body away from the accommodating cavity is provided with a recessed groove surrounding the first accommodating groove, an edge of the post cover plate is provided with a lap joint portion, and at least part of the lap joint portion is embedded in the recessed groove.

In the above technical solution, the recessed groove can be used for positioning to improve the assembly efficiency of the post body and the post cover plate, and the recessed groove can be used for limiting to a certain extent to improve the stability and reliability of fit between the post body and the post cover plate. In addition, the recessed groove is provided, enabling the post cover plate to be further embedded in the post body. As a result, the post cover plate protrudes less or even does not protrude from the post body, thereby reducing the occupied space outside the post body.

In some embodiments, the communication channel further includes a second accommodating groove, where the second accommodating groove is located on a side of the first accommodating groove close to the accommodating cavity, the second accommodating groove is open in a direction of the accommodating cavity to communicate with the accommodating cavity, and the liquid passing hole penetrates through a groove wall of the second accommodating groove to communicate the first accommodating groove with the second accommodating groove.

In the above technical solution, the second accommodating groove can play a role in buffering the electrolyte or gas. When the battery cell is filled with the electrolyte, the electrolyte can be buffered by using the second accommodating groove to improve the problem of splashing, overflowing, or the like of the electrolyte; and when the battery cell works, the electrolyte generates gas after participating in a reaction, and the electrolyte or the gas generated in the accommodating cavity can be buffered by using the second accommodating groove, thereby improving the problem of electrolyte overflowing or excessive gas pressure in the accommodating cavity, and enhancing the reliability of the battery cell.

In some embodiments, the battery cell includes a battery core assembly, where the battery core assembly includes an active material coating portion accommodated in the accommodating cavity and a conductive portion connected to the active material coating portion, a communication hole communicating the first accommodating groove with the accommodating cavity is formed in the post body, one or a plurality of communication holes are provided, at least one of the communication holes serves as the liquid passing hole, and the conductive portion passes through at least one of the communication holes to be at least partially accommodated in the first accommodating groove.

In the above technical solution, at least part of the conductive portion is accommodated in the first accommodating groove, so that at least part of the conductive portion occupies the space in the first accommodating groove, thereby reducing the space occupied by the conductive portion in the accommodating cavity, saving the space in the accommodating cavity to accommodate the active material coating portion with a larger volume, and increasing the energy density of the battery cell, or reducing the size of the battery cell in the case where the energy density of the battery cell is unchanged.

In some embodiments, the communication hole through which the conductive portion passes is a first communication hole, and at least the first communication hole serves as the liquid passing hole.

In the above technical solution, when at least the first communication hole serves as the liquid passing hole, the first communication hole has a liquid passing function, that is, the first communication hole can be used for the electrolyte to pass through after being passed by the conductive portion. In this case, the electrolyte can pass through at least the first communication hole, so that whether to form a communication hole through which the conductive portion does not pass can be selected as required, thereby reducing the total number of communication holes, simplifying the structure and processing of the post body, and improving the structural strength of the post body.

In some embodiments, the communication hole through which the conductive portion passes is the first communication hole, a plurality of communication holes are provided, at least one second communication hole through which the conductive portion does not pass is further included, and at least the second communication hole serves as the liquid passing hole.

In the above technical solution, when at least the second communication hole serves as the liquid passing hole, the electrolyte can pass through at least the second communication hole. In this case, there is no need to set the diameter or the number of the first communication holes to be large for the electrolyte to pass through the first communication holes, nor is it necessary to set the size of the conductive portion to be small for the electrolyte to pass through the first communication hole. It is only necessary to design the size of the first communication hole to be slightly larger than the size of the conductive portion so that the conductive portion can pass through. Thus, the problem that impurities and the like fall into the accommodating cavity from a gap between the conductive portion and the first communication hole can be improved, the problem that the local strength of the post body is weak due to the excessive size of the first communication hole can also be improved, and the size of the conductive portion can be made relatively large, which is beneficial to improving the current transfer efficiency. Moreover, since the electrolyte is not affected by the conductive portion when passing through the second communication hole, the liquid filling efficiency can be improved, and the electrolyte is less likely to cause problems such as contamination and corrosion to the conductive portion.

In some embodiments, a side groove wall of the first accommodating groove close to the accommodating cavity is a bottom groove wall, the conductive portion is connected to the bottom groove wall to form a first connecting portion, and an orthographic projection of the liquid filling hole on the bottom groove wall is offset from the first connecting portion.

In the above technical solution, the electrolyte injected from the liquid filling hole can avoid the first connecting portion between the conductive portion and the post body as much as possible, thereby reducing the contamination and corrosion of the first connecting portion caused by the electrolyte.

In some embodiments, the communication hole through which the conductive portion passes is a first communication hole, the post body is formed into an elongated structure, and the first communication hole is formed into an elongated hole with a length direction extending from one end to the other end of a length of the post body.

In the above technical solution, the space of the post body can be fully utilized, and the length of the first communication hole can be increased as much as possible, so that the first communication hole can be passed by the conductive portion with a larger size, which is beneficial to the increase in the size of the conductive portion, thereby improving the current transfer efficiency. When the first communication hole serves as the liquid passing hole, the length of the first communication hole is increased, which is also beneficial to improving the liquid filling efficiency.

In some embodiments, the post cover plate is a long cover plate, and the liquid filling hole is eccentrically formed in a length direction of the post cover plate.

In the above technical solution, the liquid filling hole can avoid the conductive portion as much as possible, thereby reducing the contamination and corrosion of the first connecting portion between the conductive portion and the post body caused by the injected electrolyte.

In some embodiments, the battery cell includes a battery core assembly, where the battery core assembly includes an active material coating portion accommodated in the accommodating cavity and a conductive portion connected to the active material coating portion, and the conductive portion is connected to a side wall surface of the post body facing the accommodating cavity.

In the above technical solution, the conductive portion is connected to a side wall surface of the post body facing the accommodating cavity, so that the conductive portion neither passes through the communication hole nor extends into the first accommodating groove, thereby reducing the contamination and corrosion of the first connecting portion between the conductive portion and the post body caused by the injected electrolyte.

In some embodiments, the liquid filling hole is opposite to the liquid passing hole.

In the above technical solution, the electrolyte injected through the liquid filling hole can directly flow in a direction of the liquid passing hole opposite to the liquid filling hole, so that liquid filling can be achieved more quickly and efficiently, and the liquid filling efficiency can be improved.

In some embodiments, the post structure includes a post body, where the post body is disposed on the first housing wall, the liquid filling hole is formed in the post body, and an accommodating groove communicating with the liquid filling hole is formed in the post body.

In the above technical solution, the liquid filling hole is formed in the post body, so that the post cover plate can be omitted, or the liquid filling hole can be omitted from the post cover plate, thereby simplifying the structure or processing. Moreover, since the post body is provided with the accommodating groove communicating with the liquid filling hole, the post body has a large buffer space while meeting the liquid filling requirements, which can play a role in buffering the electrolyte to a certain extent, and is beneficial to reducing the possibility of splashing or overflowing of the electrolyte during manufacturing or use of the battery cell.

In some embodiments, the accommodating groove includes a third accommodating groove with a groove opening that is open in a direction away from the accommodating cavity, where the liquid filling hole penetrates through a side groove wall of the third accommodating groove close to the accommodating cavity.

In the above technical solution, the third accommodating groove can play a role in buffering the electrolyte to improve the problem of splashing, overflowing, or the like of the electrolyte. Moreover, the side wall of the third accommodating groove can block the electrolyte from splashing to a certain extent, which reduces the contamination of the electrolyte to the outside and facilitates rapid liquid filling. Moreover, a liquid filling nozzle can be flexibly disposed, for example, an outlet of the liquid filling nozzle can be made large, for example, the outlet of the liquid filling nozzle is set to match the groove opening of the third accommodating groove, thereby further improving the liquid filling efficiency.

In some embodiments, the accommodating groove further includes a fourth accommodating groove with a groove opening that is open in a direction of the accommodating cavity, where the fourth accommodating groove is located on a side of the third accommodating groove close to the accommodating cavity, and the liquid filling hole penetrates through a side groove wall of the fourth accommodating groove away from the accommodating cavity to communicate the third accommodating groove with the fourth accommodating groove.

In the above technical solution, the fourth accommodating groove is provided, so that the height of the liquid filling hole during liquid filling can be increased, which is beneficial to increasing the total injection amount of the electrolyte and prolonging the cycle life of the battery cell. Moreover, when the liquid filling hole is sealed with a relatively long sealing nail, since the liquid filling hole is relatively high and the sealing nail protrudes below the liquid filling hole by a short length or does not protrude below the liquid filling hole, the sealing nail is less likely to interfere with or electrically contact the battery core assembly below the post body, so that it is not necessary to thicken the lower plastic structure below the post body. Consequently, the lower plastic structure can be thinned to reduce the material cost, and the space occupied by the lower plastic structure in the accommodating cavity can be reduced to increase the energy density of the battery cell. In addition, the gas generated in the accommodating cavity or the electrolyte that tends to overflow can enter the fourth accommodating groove. The fourth accommodating groove can play a buffering role to improve the working reliability of the battery cell.

In some embodiments, the post structure further includes a post cover plate, where the post cover plate covers the post body and seals the groove opening of the third accommodating groove.

In the above technical solution, after liquid filling, the post cover plate can be used to cover the post body, so that the groove opening of the third accommodating groove in the post body is sealed with the post cover plate. Consequently, the third accommodating groove is in a sealed state, the electrolyte is prevented from overflowing, and external foreign matter is prevented from entering the battery cell, thereby improving the reliability of the battery cell. Moreover, since the liquid filling hole penetrates through a side groove wall of the third accommodating groove close to the accommodating cavity, the third accommodating groove is equivalent to a recessed structure, so that the liquid filling hole is away from the groove opening of the third accommodating groove and is relatively far away from a joint between the post cover plate and the post body, and when the electrolyte overflows from the liquid filling hole, the overflowing electrolyte is less likely to contact the joint between the post cover plate and the post body, which can reduce the corrosion and contamination of the joint, etc.

In some embodiments, the accommodating groove includes a fifth accommodating groove with a groove opening that is open in a direction of the accommodating cavity, where the liquid filling hole penetrates through a side groove wall of the fifth accommodating groove away from the accommodating cavity.

In the above technical solution, the fifth accommodating groove can play a role in buffering the electrolyte, and the side wall of the fifth accommodating groove can block the electrolyte from splashing, which facilitates rapid liquid filling. Moreover, the height of the liquid filling hole can be increased. When the liquid filling hole is sealed, the gas generated in the accommodating cavity or the electrolyte can enter the fifth accommodating groove. The fifth accommodating groove can play a buffering role to improve the working reliability of the battery cell. In addition, when the liquid filling hole is sealed with a relatively long sealing nail, since the liquid filling hole is relatively high and the sealing nail protrudes from a lower end of the liquid filling hole by a short length or does not protrude from the lower end of the liquid filling hole, the sealing nail is less likely to interfere with the battery core assembly in the accommodating cavity, or it is not necessary to thicken the lower plastic structure below the post body in order to prevent the sealing nail from interfering with the battery core assembly. Consequently, the lower plastic structure can be thinned to reduce the material cost, and the space occupied by the lower plastic structure in the accommodating cavity can be reduced to increase the energy density of the battery cell.

In some embodiments, the protruding structure includes: a pressure relief structure, where the pressure relief structure is disposed on the first housing wall, a weak region is provided on the pressure relief structure and/or at a joint between the pressure relief structure and the first housing wall, and the liquid filling hole is formed in the pressure relief structure.

In the above technical solution, the pressure relief structure is set to at least partially protrude from the outer surface of the first housing wall, and the liquid filling hole is formed in the pressure relief structure, so that the liquid filling hole can be prevented from separately occupying the space on the first housing wall, and when the post structure is disposed on the first housing wall, a large space can be saved to arrange the post structure, which is beneficial to increasing the size of the post structure. Moreover, there is no need to perform special processing on the first housing wall to form the liquid filling hole in the first housing wall, thereby reducing the structural complexity and processing difficulty of the first housing wall.

In some embodiments, the protruding structure includes: a boss structure, where the boss structure is integrally formed on the first housing wall, the housing is provided with a post structure and a pressure relief structure that are spaced apart from the boss structure, and the liquid filling hole is formed in the boss structure.

In the above technical solution, the liquid filling hole is formed in the boss structure instead of the pressure relief structure and the post structure, so that the processing difficulty of the pressure relief structure and the post structure can be lowered, and the processing cost of the pressure relief structure and the post structure can be reduced.

In some embodiments, the housing includes a third housing wall disposed on a different side from the first housing wall, where at least one of the post structure and the pressure relief structure is disposed on the third housing wall.

In the above technical solution, at least one of the post structure and the pressure relief structure is disposed on the third housing wall not provided with the boss structure, so that the boss structure can be prevented from occupying the space on the housing for arranging the post structure and/or the pressure relief structure, thereby increasing the size of the post structure and/or the pressure relief structure.

In some embodiments, a current-carrying area of the outer hole end of the liquid filling hole is greater than a current-carrying area of the inner hole end of the liquid filling hole.

In the above technical solution, when the electrolyte is injected into the liquid filling hole, the electrolyte flows in a direction from the outer hole end to the inner hole end. The current-carrying area of the outer hole end of the liquid filling hole is set to be greater than the current-carrying area of the inner hole end of the liquid filling hole, which facilitates the fit between the liquid filling hole and the liquid filling nozzle. For example, it facilitates the insertion of the liquid filling nozzle into the outer hole end of the liquid filling hole, thereby reducing the probability of liquid leakage during injection of the electrolyte. Moreover, since the current-carrying area of the outer hole end of the liquid filling hole is relatively large, a sealing structure is conveniently mounted to seal the liquid filling hole.

In some embodiments, the liquid filling hole includes a first hole segment and a second hole segment, where the first hole segment is located upstream of the second hole segment along a liquid filling circulation direction, a current-carrying area of the first hole segment gradually decreases or remains unchanged along a direction from the first hole segment to the second hole segment, a current-carrying area of the second hole segment gradually decreases or remains unchanged along the direction from the first hole segment to the second hole segment, and a current-carrying area of an outlet end of the first hole segment is greater than or equal to a current-carrying area of an inlet end of the second hole segment.

In the above technical solution, the current-carrying area of the first hole segment is relatively large, so that it is convenient for the first hole segment to fit with the liquid filling nozzle; and the first hole segment can play a role in buffering the electrolyte, which is beneficial to improving the liquid filling efficiency and reducing the risk of electrolyte splashing or overflowing, and facilitates the assembly of the sealing structure in the liquid filling hole to achieve reliable sealing of the liquid filling hole after liquid filling.

In some embodiments, the liquid filling hole includes the first hole segment and the second hole segment, where the current-carrying area of the first hole segment gradually decreases along the direction from the first hole segment to the second hole segment, and the current-carrying area of the outlet end of the first hole segment is equal to the current-carrying area of the inlet end of the second hole segment.

In the above technical solution, the liquid filling hole has two segments, and the first hole segment is substantially in a funnel shape. A side wall of the first hole segment may have a flow guiding effect, so that the electrolyte entering the first hole segment can quickly flow in a direction of the second hole segment, thereby improving the liquid filling efficiency. Moreover, since the current-carrying area of the outlet end of the first hole segment is equal to the current-carrying area of the inlet end of the second hole segment, no step surface is formed between the first hole segment and the second hole segment; and due to the funnel shape of the first hole segment, liquid does not easily accumulate in the first hole segment.

In some embodiments, the liquid filling hole further includes a third hole segment, where the third hole segment is located between the first hole segment and the second hole segment along the liquid filling circulation direction, a current-carrying area of the third hole segment gradually decreases along the direction from the first hole segment to the second hole segment, a current-carrying area of an inlet end of the third hole segment is less than or equal to the current-carrying area of the outlet end of the first hole segment, and a current-carrying area of an outlet end of the third hole segment is equal to the current-carrying area of the inlet end of the second hole segment.

In the above technical solution, when the electrolyte is injected into the liquid filling hole, the electrolyte first flows through the first hole segment, then flows through the third hole segment, and then flows through the second hole segment. The current-carrying area of the inlet end of the third hole segment is less than or equal to the current-carrying area of the outlet end of the first hole segment, which indicates that the current-carrying area of the first hole segment is relatively large, so that it is convenient for the first hole segment to fit with the liquid filling nozzle. Moreover, the first hole segment can play a role in buffering the electrolyte, which is beneficial to improving the liquid filling efficiency and reducing the risk of electrolyte splashing or overflowing, and facilitates the assembly of the sealing structure in the liquid filling hole to achieve reliable sealing of the liquid filling hole after liquid filling. Moreover, the current-carrying area of the third hole segment gradually decreases along the direction from the first hole segment to the second hole segment, the third hole segment is substantially in a funnel shape, and a side wall of the third hole segment may have a flow guiding effect, so that the electrolyte entering the third hole segment can quickly flow in the direction of the second hole segment, thereby improving the liquid filling efficiency. In addition, since the current-carrying area of the outlet end of the third hole segment is equal to the current-carrying area of the inlet end of the second hole segment, no step surface is formed between the third hole segment and the second hole segment; and due to the funnel shape of the third hole segment, liquid does not easily accumulate in the third hole segment.

In some embodiments, the battery cell further includes: a sealing structure, where the sealing structure fits with the protruding structure and seals the liquid filling hole.

In the above technical solution, the sealing structure is provided, so that the sealing performance of the liquid filling hole is ensured, the electrolyte is prevented from overflowing, and the external foreign matter is prevented from entering the accommodating cavity from the liquid filling hole, thereby improving the reliability of the battery cell.

In some embodiments, the sealing structure includes: a first sealing member and/or a second sealing member, where at least part of the first sealing member is embedded in the liquid filling hole and is in interference fit with the liquid filling hole for sealing; and the second sealing member covers the outer hole end of the liquid filling hole and is hermetically connected to the protruding structure.

In the above technical solution, the first sealing member is fixed by means of interference fit, which is beneficial to rapid mounting of the first sealing member and to the improvement of the sealing reliability of the first sealing member for the liquid filling hole. The second sealing member is provided, so that sealing can be implemented from the source of the liquid filling hole, thereby reducing the probability of foreign matter contaminating the liquid filling hole; and the second sealing member covers the liquid inlet end of the liquid filling hole, which facilitates rapid assembly of the second sealing member and improves the assembly efficiency of the second sealing member.

In some embodiments, the first housing wall is an integrally formed cover plate, or the first housing wall is integrally formed with at least one second housing wall, and the second housing wall extends toward a side of the first housing wall in a thickness direction.

In the above technical solution, the position of the protruding structure can be flexibly designed, thereby extending the application range of the battery cell.

In a second aspect, further provided in the embodiments of the present application is a battery, including a busbar component and a plurality of battery cells according to any one of the above solutions, where at least two of the battery cells are electrically connected via the busbar component.

In the above technical solution, both the performance and manufacturability of the battery cell according to the embodiments of the present application are improved, thereby helping improve the performance and manufacturability of the battery.

In a third aspect, further provided in the embodiments of the present application is an electric device, including the battery according to any one of the above solutions.

In the above technical solution, since the performance of the battery is improved, the working electrical performance of the electric device can be improved.

### DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle provided in some embodiments of the present application;
FIG. 2 is an exploded view of a structure of a battery provided in some embodiments of the present application;
FIG. 3 is a schematic structural diagram of a battery cell provided in some embodiments of the present application;
FIG. 4 is a schematic diagram of an orthographic projection of a battery cell provided in some embodiments of the present application;
FIG. 5 is a sectional view taken along a line M-M in FIG. 4;
FIG. 6 is a partial enlarged view of FIG. 5;
FIG. 7 is a sectional view of a battery cell provided in some embodiments of the present application;
FIG. 8 is a partial enlarged view of a part F1 circled in FIG. 7;
FIG. 9 is a sectional view of a battery cell provided in some embodiments of the present application;
FIG. 10 is a schematic diagram showing the fit between a post body and a conductive portion provided in some embodiments of the present application;
FIG. 11 is a schematic diagram showing the fit between a post body and a conductive portion provided in some embodiments of the present application;
FIG. 12 is a sectional view of a battery cell provided in some embodiments of the present application;
FIG. 13 is a sectional view of a battery cell provided in some embodiments of the present application;
FIG. 14 is a sectional view of a battery cell provided in some embodiments of the present application;
FIG. 15 is a sectional view of a battery cell provided in some embodiments of the present application;
FIG. 16 is a sectional view of a battery cell provided in some embodiments of the present application;
FIG. 17 is a perspective view of a battery cell provided in some embodiments of the present application;
FIG. 18 is a perspective view of a battery cell provided in some embodiments of the present application;
FIG. 19 is a perspective view of the battery cell shown in FIG. 18 from another angle;
FIG. 20 is a partial sectional view of a protruding structure provided in some embodiments of the present application;
FIG. 21 is a sectional view showing the fit between the protruding structure shown in FIG. 20 and a sealing structure;
FIG. 22 is a partial sectional view of a protruding structure provided in some embodiments of the present application;
FIG. 23 is a partial sectional view of a protruding structure provided in some embodiments of the present application;
FIG. 24 is a partial sectional view of a protruding structure provided in some embodiments of the present application;
FIG. 25 is a sectional view showing the fit between a protruding structure and a sealing structure provided in some embodiments of the present application;
FIG. 26 is a sectional view showing the fit between a protruding structure and a sealing structure provided in some embodiments of the present application;
FIG. 27 is a sectional view of a battery cell provided in some embodiments of the present application; and
FIG. 28 is a schematic diagram showing the fit between a battery cell and a busbar component provided in some embodiments of the present application.

Reference signs: vehicle 1000; first direction X; second direction Y; third direction Z; battery 100; controller 200; motor 300; box 101; first box body 1011; second box body 1012; battery cell 102; post structure 1020; housing 1; accommodating cavity 1A; first housing wall 11; second housing wall 12; third housing wall 13; outer surface 11a of first housing wall; inner surface 11b of first housing wall; post body 2; communication channel 2A; accommodating groove 21; first accommodating groove 211; bottom groove wall 2110; second accommodating groove 212; third accommodating groove 213; fourth accommodating groove 214; fifth accommodating groove 215; communication hole 22; first communication hole 221; second communication hole 222; liquid passing hole 23; recessed groove 25; fit clearance 26; outer stop portion 271; inner stop portion 272; sealing structure 1022; post cover plate 3; liquid filling hole 31; outer hole end 31a; inner hole end 31b; first hole segment 311; second hole segment 312; third hole segment 313; step surface 314; lap joint portion 32; first cover plate portion 331; second cover plate portion 332; boundary portion 34; first sealing member 4; second sealing member 5; extension portion 51; central portion 52; edge portion 53; avoidance portion 54; avoidance cavity 55; sealing gasket 1023; insulating gasket 1024; pressure relief structure 1025; boss structure 1026; battery core assembly 7; active material coating portion 71; conductive portion 72; first connecting portion 73; protruding structure 8; busbar component 103; and second connecting portion 104.

### DESCRIPTION OF EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by a person skilled in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

The term "and/or" in the present application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, the battery cell may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cell is generally classified into three types according to a packaging manner: a cylindrical battery cell, a square battery cell, and a pouch battery cell, which is not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, etc. The battery module generally includes a plurality of battery cells. The battery pack generally includes a box for encapsulating one or more battery cells or one or more battery modules. The box can prevent liquids or other foreign objects from affecting the charging or discharging of the battery cells.

The battery cell includes a housing, a battery core assembly, and an electrolyte, where the housing is configured to accommodate the battery core assembly and the electrolyte. The battery core assembly includes at least one electrode assembly, where the electrode assembly is composed of a positive electrode sheet, a negative electrode sheet, and a separator, and the electrode assembly may be of a wound structure, a laminated structure, etc. Working of the battery cell mainly relies on migration of metal ions between the positive electrode sheet and the negative electrode sheet.

The positive electrode sheet may generally include a positive electrode current collector and a positive electrode active material layer. The positive electrode active material layer is directly or indirectly coated on the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the positive electrode current collector may be made of aluminum, and the positive electrode active material layer may be made from lithium cobalt oxide, lithium iron phosphate, ternary lithium, lithium manganate oxide, or the like.

The negative electrode sheet includes a negative electrode current collector and a negative electrode active material layer. The negative electrode active material layer is directly or indirectly coated on the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. The negative electrode current collector may be made of copper, and the negative electrode active material layer may be made of carbon, silicon, or the like.

To ensure high-current passage without any fusing, a plurality of positive electrode tabs are provided and stacked together to form a tab portion of a positive electrode, and a plurality of negative electrode tabs are provided and stacked together to form a tab portion of a negative electrode. The housing is provided with posts, the tab portion of the positive electrode is electrically connected to the post of the positive electrode, and the tab portion of the negative electrode is electrically connected to the post of the negative electrode. For example, the tab portion may be welded to the post to form a direct electrical connection between the tab portion to the post. For another example, the battery core assembly may include an adapter piece, where the tab portion is welded to the adapter piece, and the adapter piece is welded to the post, to form an indirect electrical connection between the tab portion and the post.

The material of the separator is not limited, and may be, for example, polypropylene, polyethylene, or the like.

In a battery cell in the related art, a liquid filling hole is usually formed in a top cover of a housing, and a post and an explosion-proof valve are disposed on the top cover. An outer end of the liquid filling hole is flush with an outer surface of the top cover, and an inner end of the liquid filling hole is flush with an inner surface of the top cover. After an electrical connection between a tab portion and the post is completed, an electrolyte is injected into the housing through the liquid filling hole. During liquid filling, if the liquid filling speed is too high, the electrolyte may flow back and overflow from the liquid filling hole, resulting in a low liquid filling speed; and the overflowing electrolyte may also easily contaminate and corrode the top cover as well as the post and the explosion-proof valve on the top cover, which affects the reliability of the battery cell. In addition, since the injection height of the electrolyte cannot exceed the inner end of the liquid filling hole, the liquid level of the electrolyte in the housing is at most flush with the inner surface of the top cover, which limits the total injection amount of the electrolyte in the housing and affects the cycle service life of the battery cell.

To this end, proposed in the embodiments of the present application is a battery cell. A housing of the battery cell includes a first housing wall. A protruding structure is disposed on the first housing wall, and a liquid filling hole is formed in the protruding structure, so that an inner hole end of the liquid filling hole extends beyond an inner surface of the first housing wall towards an outer side. During liquid filling, the first housing wall is placed horizontally, an upper surface of the first housing wall is an outer surface, a lower surface of the first housing wall is the inner surface, an upper end of the liquid filling hole is an outer hole end, a lower end of the liquid filling hole is an inner hole end, and the lower end of the liquid filling hole is higher than the lower surface of the first housing wall, so that the height of the lower end of the liquid filling hole can be increased, and an additional accommodating space can be formed below the liquid filling hole to play a buffering role.

In this way, during manufacturing, handling or use of the battery cell, if electrolyte tends to overflow, the electrolyte that is about to overflow can enter the accommodating space. Thus, the probability that the electrolyte overflows from the liquid filling hole is reduced, which is beneficial to improving the problem that the overflowing electrolyte contaminates the first housing wall and parts (such as a post or an explosion-proof valve) on the first housing wall. Consequently, during manufacturing, it is beneficial to increasing the liquid filling speed to improve the manufacturability of the battery cell, and it is beneficial to improving the reliability of the battery cell.

Moreover, because the height of the lower end of the liquid filling hole is increased, when the height of the injected electrolyte reaches the lower end of the liquid filling hole, the injection height of the electrolyte is higher than the lower surface of the first housing wall, thereby increasing the total injection amount of the electrolyte in the housing, and prolonging the cycle life of the battery cell. It can be understood that, during use of the battery cell, the consumption of the electrolyte causes the electrolyte inside the battery cell to decrease, which affects the service life of the battery cell, and increasing the total injection amount of the electrolyte is beneficial to prolonging the service life of the battery cell.

In addition, during use of the battery cell, the electrolyte generates gas after participating in a reaction, resulting in an increase in a pressure in the housing, and when the pressure reaches a certain level, there is a reliability problem. When gas is formed in the housing, the additional accommodating space below the liquid filling hole can play a role in buffering the gas, thereby improving the reliability problem caused by the increase in pressure, and enhancing the use reliability of the battery cell.

Provided in the embodiments of the present application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

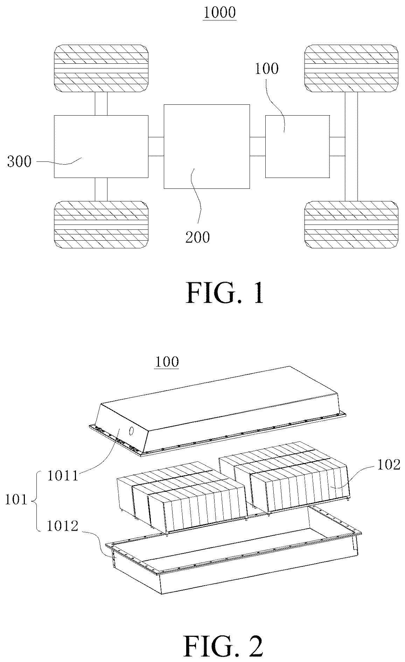

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000. The vehicle 1000 may further include a controller 200 and a motor 300, and the controller 200 is used to control the battery 100 to power the motor 300, for example, for a working power requirement for the vehicle 1000 during starting, navigating, and driving the vehicle 1000.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG. 2 is an exploded view of a structure of a battery 100 provided in some embodiments of the present application. The battery 100 includes a box 101 and a plurality of battery cells 102, where the battery cells 102 are accommodated in the box 101. The box 101 is configured to provide an assembly space for the battery cells 102, and the box 101 may have various structures. In some embodiments, the box 101 may include a first box body 1011 and a second box body 1012, where the first box body 1011 and the second box body 1012 cover each other, and the first box body 1011 and the second box body 1012 jointly define the assembly space for accommodating the battery cells 102. The second box body 1012 may be of a hollow structure with an opening at one end, the first box body 1011 may be of a plate-shaped structure, and the first box body 1011 covers an open side of the second box body 1012, so that the first box body 1011 and the second box body 1012 jointly define the assembly space. Alternatively, the first box body 1011 and the second box body 1012 each may be of a hollow structure with an open side, and the open side of the first box body 1011 covers the open side of the second box body 1012. Certainly, the box 101 formed by the first box body 1011 and the second box body 1012 may be in various shapes, for example, a cylinder, a cuboid, or the like.

In the battery 100, a plurality of battery cells 102 may be subjected to series connection, parallel connection, or series-parallel connection. The series-parallel connection means that the plurality of battery cells 102 are subjected to both series connection and parallel connection. The plurality of battery cells 102 may be subjected to series connection, parallel connection, or series-parallel connection directly, and then a combination formed by the plurality of battery cells 102 is accommodated in the box 101. Certainly, the battery 100 may also be formed in a manner that the plurality of battery cells 102 are first subjected to series connection, parallel connection, or series-parallel connection to form battery modules, then the plurality of battery modules are subjected to series connection, parallel connection, or series-parallel connection to form a combination, and the combination is accommodated in the box 101. The battery 100 may further include other structures. For example, the battery 100 may further include a busbar component for implementing an electrical connection between the plurality of battery cells 102.

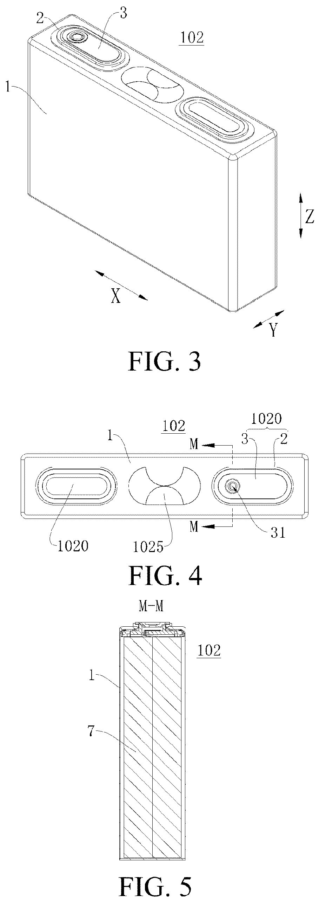

Each battery cell 102 may be a secondary battery or a primary battery, or may be a lithium-sulfur battery, a sodium-ion battery, or a magnesium-ion battery, but is not limited thereto. The battery cell 102 may be in a shape of a cylinder, a flat body, a cuboid, etc. For example, referring to the embodiment shown in FIG. 3, the length direction of the battery cell 102 is a first direction X, the width direction of the battery cell 102 is a second direction Y, and the height direction of the battery cell 102 is a third direction Z, where the first direction X, the second direction Y, and the third direction Z are mutually perpendicular.

According to some embodiments of the present application, referring to FIG. 4 to FIG. 6, the battery cell 102 includes a housing 1. The housing 1 defines an accommodating cavity 1A, and the housing 1 includes a first housing wall 11. A side surface of the first housing wall 11 facing the accommodating cavity 1A is an inner surface 11b, and a side surface of the first housing wall 11 away from the accommodating cavity 1A is an outer surface 11a, that is, a side of the first housing wall 11 facing the accommodating cavity 1A is an inner side, and a side of the first housing wall 11 away from the accommodating cavity 1A is an outer side.

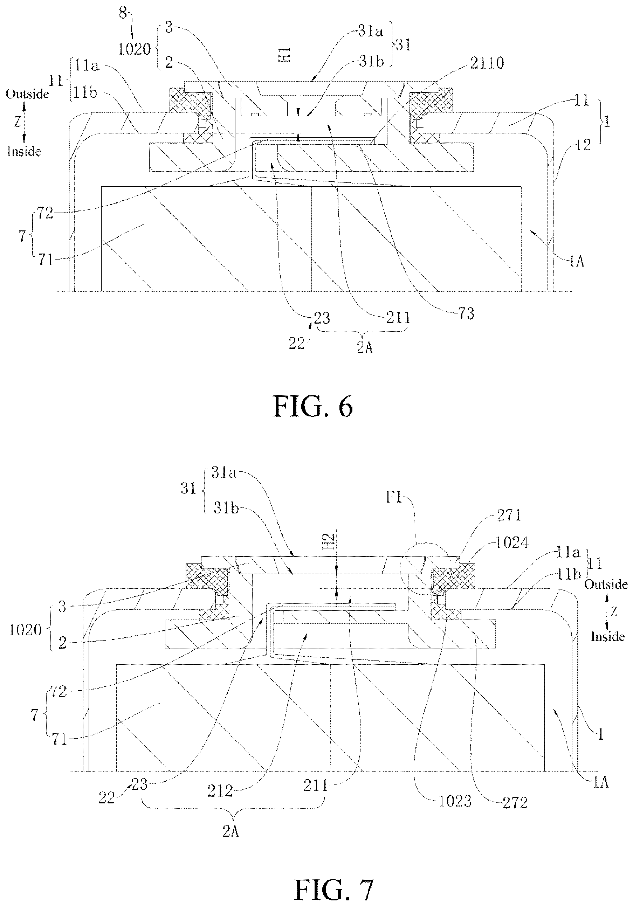

Referring to FIG. 5 and FIG. 6, the first housing wall 11 is provided with a protruding structure 8, and at least part of the protruding structure 8 protrudes from a side (i.e., an outer side) of the outer surface 11a of the first housing wall 11 away from the accommodating cavity 1A, that is, the protruding structure 8 may completely protrude from the outer side of the outer surface 11a of the first housing wall 11, or a part of the protruding structure 8 may protrude from the outer side of the outer surface 11a of the first housing wall 11. For example, when the first housing wall 11 is placed horizontally, an upper surface of the first housing wall 11 is the outer surface 11a, and a lower surface of the first housing wall 11 is the inner surface 11b, the protruding structure 8 may be completely higher than the upper surface of the first housing wall 11, or only a part of the protruding structure 8 may be higher than the upper surface of the first housing wall 11.

As shown in FIG. 6, a liquid filling hole 31 is formed in the protruding structure 8, two ends of the liquid filling hole 31 are an outer hole end 31a and an inner hole end 31b respectively, and the outer hole end 31a and the inner hole end 31b are sequentially disposed along a direction from the outer side to the inner side, that is, the outer hole end 31a and the inner hole end 31b are arranged along a direction from the outer surface 11a of the first housing wall 11 to the inner surface 11b of the first housing wall 11, for example, when the upper surface of the first housing wall 11 is the outer surface 11a and the lower surface of the first housing wall 11 is the inner surface 11b, the outer hole end 31a and the inner hole end 31b are arranged along a direction from top to bottom. In this case, an upper end of the liquid filling hole 31 is the outer hole end 31a, and a lower end of the liquid filling hole 31 is the inner hole end 31b.

As shown in FIG. 6, in the embodiments of the present application, the inner hole end 31b is located on a side of the inner surface 11b of the first housing wall 11 away from the accommodating cavity 1A, that is, the inner hole end 31b of the liquid filling hole 31 is disposed away from the inner side relative to the inner surface 11b of the first housing wall 11, or the inner hole end 31b of the liquid filling hole 31 is disposed away from the accommodating cavity relative to the inner surface 11b of the first housing wall 11. For example, as shown in FIG. 6, the inner hole end 31b of the liquid filling hole 31 extends beyond the inner surface 11b of the first housing wall 11 towards the outer side by a distance of H1, so that an additional accommodating space can be formed on the inner side of the inner hole end 31b of the liquid filling hole 31.

During liquid filling, the first housing wall 11 is placed horizontally, the upper surface of the first housing wall 11 is the outer surface 11a, the lower surface of the first housing wall 11 is the inner surface 11b, the upper end of the liquid filling hole 31 is the outer hole end 31a, the lower end of the liquid filling hole 31 is the inner hole end 31b, and the lower end of the liquid filling hole 31 is higher than the lower surface of the first housing wall 11, so that the height of the lower end of the liquid filling hole 31 can be increased, and an additional accommodating space can be formed below the liquid filling hole 31 to play a buffering role.

In this way, during manufacturing, handling or use of the battery cell 102, if electrolyte tends to overflow, the electrolyte that is about to overflow can enter the accommodating space. Thus, the probability that the electrolyte overflows from the liquid filling hole 31 is reduced, which is beneficial to improving the problem that the overflowing electrolyte contaminates the first housing wall 11 and parts (such as a post or an explosion-proof valve) on the first housing wall 11. Consequently, during manufacturing, it is beneficial to increasing the liquid filling speed to improve the manufacturability of the battery cell 102, and it is beneficial to improving the reliability of the battery cell 102.

Moreover, because the height of the lower end of the liquid filling hole 31 is increased, when the height of the injected electrolyte reaches the lower end of the liquid filling hole 31, the injection height of the electrolyte is higher than the lower surface of the first housing wall 11, thereby increasing the total injection amount of the electrolyte in the housing 1, and prolonging the cycle life of the battery cell 102. It can be understood that, during use of the battery cell 102, the consumption of the electrolyte causes the electrolyte inside the battery cell 102 to decrease, which affects the service life of the battery cell 102, and increasing the total injection amount of the electrolyte is beneficial to prolonging the service life of the battery cell 102.

In addition, during use of the battery cell 102, the electrolyte generates gas after participating in a reaction, resulting in an increase in a pressure in the housing 1, and when the pressure reaches a certain level, there is a reliability problem. When gas is formed in the housing 1, the additional accommodating space below the liquid filling hole 31 can play a role in buffering the gas, thereby improving the reliability problem caused by the increase in pressure, and enhancing the use reliability of the battery cell 102.

In addition, it can be understood that after the electrolyte is injected, the liquid filling hole 31 can be sealed to prevent the electrolyte from leaking out and prevent external contaminants from entering the housing 1 from the liquid filling hole 31. After the liquid filling hole 31 is sealed, a placement orientation of the first housing wall 11 is not limited, and the first housing wall may be placed horizontally or vertically. The first housing wall 11 may be located at a top, at a bottom, on a side, etc. of the housing 1. An orientation of the liquid filling hole 31 changes accordingly with the change of the orientation of the first housing wall 11.

For example, when the battery cell 102 is placed in such a way that the first housing wall 11 forms a top wall of the housing 1, the upper surface of the first housing wall 11 is the outer surface 11a, the lower surface of the first housing wall 11 is the inner surface 11b, the upper end of the liquid filling hole 31 is the outer hole end 31a, and the lower end of the liquid filling hole 31 is the inner hole end 31b.

For another example, when the battery cell 102 is placed in such a way that the first housing wall 11 forms a bottom wall of the housing 1, the lower surface of the first housing wall 11 is the outer surface 11a, the upper surface of the first housing wall 11 is the inner surface 11b, the lower end of the liquid filling hole 31 is the outer hole end 31a, and the upper end of the liquid filling hole 31 is the inner hole end 31b.

For another example, when the battery cell 102 is placed in such a way that the first housing wall 11 forms a left side wall of the housing 1, a left surface of the first housing wall 11 is the outer surface 11a, a right surface of the first housing wall 11 is the inner surface 11b, a left end of the liquid filling hole 31 is the outer hole end 31a, and a right end of the liquid filling hole 31 is the inner hole end 31b.

For another example, when the battery cell 102 is placed in such a way that the first housing wall 11 forms a right side wall of the housing 1, the right surface of the first housing wall 11 is the outer surface 11a, the left surface of the first housing wall 11 is the inner surface 11b, the right end of the liquid filling hole 31 is the outer hole end 31a, and the left end of the liquid filling hole 31 is the inner hole end 31b.

For another example, when the battery cell 102 is placed in such a way that the first housing wall 11 forms a front side wall of the housing 1, a front surface of the first housing wall 11 is the outer surface 11a, a rear surface of the first housing wall 11 is the inner surface 11b, a front end of the liquid filling hole 31 is the outer hole end 31a, and a rear end of the liquid filling hole 31 is the inner hole end 31b.

For another example, when the battery cell 102 is placed in such a way that the first housing wall 11 forms a rear side wall of the housing 1, the rear surface of the first housing wall 11 is the outer surface 11a, the front surface of the first housing wall 11 is the inner surface 11b, the rear end of the liquid filling hole 31 is the outer hole end 31a, and the front end of the liquid filling hole 31 is the inner hole end 31b.

To simplify the description, the following description is based on an example where "the first housing wall 11 forms the top wall of the housing 1, the upper surface of the first housing wall 11 is the outer surface 11a, the lower surface of the first housing wall 11 is the inner surface 11b, the upper end of the liquid filling hole 31 is the outer hole end 31a, and the lower end of the liquid filling hole 31 is the inner hole end 31b".

In the embodiments of the present application, the inner hole end 31b of the liquid filling hole 31 is located on a side of the outer surface 11a of the first housing wall 11 away from the accommodating cavity 1A, that is, the inner hole end 31b of the liquid filling hole 31 is disposed away from the inner side relative to the outer surface 11a of the first housing wall 11, or the inner hole end 31b of the liquid filling hole 31 is disposed close to the outer side relative to the outer surface 11a of the first housing wall 11. For example, as shown in FIG. 7, the inner hole end 31b of the liquid filling hole 31 extends beyond the outer surface 11a of the first housing wall 11 towards the outer side by a distance of H2, so that more accommodating spaces can be formed on the inner side of the inner hole end 31b. For example, during liquid filling, the first housing wall 11 is placed horizontally, the upper surface of the first housing wall 11 is the outer surface 11a, the lower surface of the first housing wall 11 is the inner surface 11b, the upper end of the liquid filling hole 31 is the outer hole end 31a, the lower end of the liquid filling hole 31 is the inner hole end 31b, and the lower end of the liquid filling hole 31 is higher than the upper surface of the first housing wall 11, so that the inner hole end 31b is disposed close to the outer side relative to the outer surface 11a of the first housing wall 11.

Thus, the height of the inner hole end 31b of the liquid filling hole 31 can be further increased, and more accommodating spaces are formed below the liquid filling hole 31. In this way, during manufacturing, handling, or use of the battery cell 102, the probability that the electrolyte overflows from the liquid filling hole 31 can be further reduced to improve the reliability and manufacturability of the battery cell 102. Moreover, the injection height of the electrolyte may be higher than the upper surface of the first housing wall 11, which is beneficial to further increasing the total injection amount of the electrolyte in the housing 1, thereby prolonging the cycle life of the battery cell 102. In addition, during use of the battery cell 102, the electrolyte generates gas after participating in a reaction, and the gas can be more buffered by the accommodating space, so that the reliability problem caused by the increase in pressure can be improved more effectively, and the use reliability of the battery cell 102 can be further enhanced.

In the battery cell in the related art, the liquid filling hole, the post, and the explosion-proof valve are disposed on the top cover of the housing at intervals. Since the liquid filling hole is separately formed in the top cover, the area of the top cover is occupied, resulting in a small area of the post. If the area of the post needs to be increased, the size of the top cover needs to be increased. In this case, the weight of the enlarged top cover will be increased accordingly, so that it is difficult to achieve the miniaturization and light weight of the top cover. Moreover, since the liquid filling hole needs to be separately formed in the top cover, the top cover has a relatively complex structure and high processing difficulty, and the liquid filling hole is not easily formed. Furthermore, for the sake of sealing performance, it is necessary to weld a sealing nail on the top cover to seal the liquid filling hole. However, as the energy density of the battery cell increases, the top cover is being made thinner and is prone to a problem such as collapse defects or weld penetration at the position where the sealing nail is welded. To improve this problem, the local part of the top cover where the sealing nail is welded is usually thickened, which leads to the increase of the material and manufacturing costs of the top cover, or the top cover needs to be thickened as a whole, which will fail to meet the lightweight and thinness requirements of the top cover and affect the increase in the energy density of the battery cell. In addition, in order to ensure the insulation at the sealing nail and avoid the interference between the sealing nail and the battery core assembly in the housing, the lower plastic structure below the top cover needs to be thickened. The thickened lower plastic structure not only increases the material cost, but also occupies more spaces in the accommodating cavity, which affects the increase in the energy density of the battery cell.

In some embodiments of the present application, as shown in FIG. 3 to FIG. 6, the protruding structure 8 includes a post structure 1020, where the post structure 1020 is disposed on the first housing wall 11, at least part of the post structure 1020 protrudes from the outer side of the outer surface 11a of the first housing wall 11, and the liquid filling hole 31 is formed in the post structure 1020. For example, when the first housing wall 11 is placed horizontally, the upper surface of the first housing wall 11 is the outer surface 11a, and the lower surface of the first housing wall 11 is the inner surface 11b, the post structure 1020 may be completely higher than the upper surface of the first housing wall 11, or only a part of the post structure 1020 may be higher than the upper surface of the first housing wall 11.

In view of this, the liquid filling hole 31 is formed in the post structure 1020, so that the electrolyte can be injected from the post structure 1020. In this way, the liquid filling hole 31 does not need to be separately formed in the first housing wall 11, so the liquid filling hole 31 does not occupy the space of the first housing wall 11, and the post structure 1020 does not need to be made small in size to avoid the liquid filling hole 31. Thus, an area of the post structure 1020 can be increased without increasing the size of the first housing wall 11. Increasing the current-carrying area of the post structure 1020 is beneficial to reducing the current-carrying resistance, improving the current-carrying efficiency, etc. Moreover, increasing the area of the post structure 1020 is also beneficial to the assembly connection between the post structure 1020 and the first housing wall 11. In addition, since it is not necessary to increase the size of the first housing wall 11 in order to increase the area of the post structure 1020, the miniaturization and light weight of the first housing wall 11 can be achieved.

Moreover, there is no need to perform special processing on the first housing wall 11 to form the liquid filling hole 31 in the first housing wall 11, thereby reducing the structural complexity and processing difficulty of the first housing wall 11. Further, it is not necessary to partially thicken the first housing wall 11 in order to weld a sealing nail on the first housing wall 11, so that the structure and processing of the first housing wall 11 can be further simplified; and it is also not necessary to thicken the first housing wall 11 as a whole in order to weld the sealing nail on the first housing wall 11, which is beneficial to meeting the lightweight and thinness requirements of the first housing wall 11, increasing the energy density of the battery cell 102, and reducing the weight and material cost of the first housing wall 11.

Furthermore, according to the battery cell 102 in the embodiments of the present application, the liquid filling hole 31 is formed in the post structure 1020, so that the manufacturing and processing of the liquid filling hole 31 can be facilitated, the size, shape, etc. of the liquid filling hole 31 can easily meet the design requirements and application requirements, the processing difficulty of the liquid filling hole 31 can be lowered, and the processing cost of the liquid filling hole 31 can be reduced.

In some embodiments of the present application, as shown in FIG. 6, the post structure 1020 includes a post body 2 and a post cover plate 3, where a communication channel 2A communicating with the inner side of the first housing wall 11 is formed in the post body 2, the post cover plate 3 covers the post body 2, and the liquid filling hole 31 is formed in the post cover plate 3 and communicates with the communication channel 2A. Since the post cover plate 3 covers the post body 2, the liquid filling hole 31 is located upstream of the communication channel 2A along a liquid filling circulation direction, that is, when the electrolyte is injected into the battery cell 102, the electrolyte first flows through the liquid filling hole 31 and then flows through the communication channel 2A. Thus, when the electrolyte needs to be injected into the accommodating cavity 1A of the battery cell 102, the electrolyte can be injected into the liquid filling hole 31. Because the liquid filling hole 31 communicates with the communication channel 2A, the electrolyte entering the liquid filling hole 31 can flow into the communication channel 2A, and because the communication channel 2A communicates with the accommodating cavity 1A, the electrolyte entering the communication channel 2A can flow into the accommodating cavity 1A, thereby achieving the injection of the electrolyte into the accommodating cavity 1A through the liquid filling hole 31 and the communication channel 2A.

In view of this, the liquid filling hole 31 is formed in the post cover plate 3, and the communication channel 2A is formed in the post body 2, so that a liquid filling path can be extended to a certain extent, a buffering effect in liquid filling can be achieved to a certain extent, and the possibility of splashing or overflowing of the electrolyte can be reduced when the battery cell 102 is filled with the electrolyte or works. Moreover, the liquid filling hole 31 is formed in the post cover plate 3, and a side of the post cover plate 3 close to the accommodating cavity 1A is further provided with the post body 2, so even if the sealing nail is disposed at the liquid filling hole 31, a lower plastic structure is separated from the sealing nail by the post body 2. Thus, the lower plastic structure does not need to be thickened to ensure the insulation at the sealing nail, and the lower plastic structure does not need to be thickened to avoid the interference between the sealing nail and a battery core assembly 7 for a long time. Consequently, the lower plastic structure can be thinned to reduce the material cost, and the space occupied by the lower plastic structure in the accommodating cavity 1A can be reduced to increase the energy density of the battery cell 102.

In some embodiments, as shown in FIG. 6, the communication channel 2A includes a first accommodating groove 211 and a liquid passing hole 23, where the first accommodating groove 211 is open in a direction of the post cover plate 3 to communicate with the liquid filling hole 31, and the liquid passing hole 23 penetrates through a groove wall of the first accommodating groove 211 and communicates the first accommodating groove 211 with the accommodating cavity 1A.

Exemplarily, the communication channel 2A includes a first accommodating groove 211 and a liquid passing hole 23, where the first accommodating groove 211 is open in a direction of the post cover plate 3 (that is, a side of the first accommodating groove 211 away from the accommodating cavity 1A is open), so that the first accommodating groove 211 communicates with the liquid filling hole 31; and the liquid passing hole 23 penetrates through a side groove wall of the first accommodating groove 211 away from the post cover plate 3 (that is, the liquid passing hole 23 is located on a side of the first accommodating groove 211 close to the accommodating cavity 1A and penetrates through a side groove wall of the first accommodating groove 211 close to the accommodating cavity 1A), so that the liquid passing hole 23 communicates the first accommodating groove 211 with the accommodating cavity 1A. Alternatively, the liquid passing hole 23 may also penetrate through groove walls at other positions of the first accommodating groove 211, as long as the first accommodating groove 211 and the accommodating cavity 1A can be communicated.

When the electrolyte needs to be injected into the accommodating cavity 1A of the battery cell 102, the electrolyte can be injected into the liquid filling hole 31. Because the liquid filling hole 31 communicates with the first accommodating groove 211, the electrolyte entering the liquid filling hole 31 can flow into the first accommodating groove 211, and because the first accommodating groove 211 communicates with the accommodating cavity 1A through the liquid passing hole 23, the electrolyte entering the first accommodating groove 211 can flow into the accommodating cavity 1A through the liquid passing hole 23, thereby achieving the injection of the electrolyte into the accommodating cavity 1A through the liquid filling hole 31, the first accommodating groove 211, and the liquid passing hole 23.

In view of this, since the communication channel 2A includes the first accommodating groove 211 formed in the post body 2 and the first accommodating groove 211 can play a role in buffering the electrolyte, the problem of splashing, overflowing, or the like of the electrolyte can be improved when the battery cell 102 is filled with the electrolyte or works. Moreover, when the electrolyte is injected, since the first accommodating groove 211 can buffer the electrolyte, the injection efficiency of the electrolyte can be improved, and the side groove wall of the first accommodating groove 211 (i.e., a groove wall extending in a direction from the open side of the first accommodating groove 211 to the accommodating cavity 1A) can block the electrolyte from splashing to a certain extent, thereby reducing the contamination of the electrolyte to the outside.

In addition, it is worth noting that when the communication channel 2A includes a first accommodating groove 211 and a groove opening of the first accommodating groove 211 is located on a side of the first accommodating groove 211 away from the accommodating cavity 1A, the liquid passing hole 23 can be formed in a side of the first accommodating groove 211 close to the accommodating cavity 1A and penetrate through a side groove wall of the first accommodating groove 211 close to the accommodating cavity 1A. In this case, the first accommodating groove 211 is equivalent to a recessed structure, so that the liquid passing hole 23 is away from the groove opening of the first accommodating groove 211, and the liquid passing hole 23 is relatively far away from a joint between the post cover plate 3 and the post body 2. When the electrolyte overflows from the liquid passing hole 23, the overflowing electrolyte is less likely to contact the joint (such as a welded joint or a bonded joint) between the post cover plate 3 and the post body 2, which can reduce the corrosion and contamination of the joint, etc.

In some embodiments of the present application, the cross-sectional shape of the first accommodating groove 211 matches the cross-sectional shape of the post body 2. Thus, the space of the post body 2 can be fully utilized, so that the size of the first accommodating groove 211 is as large as possible, thereby facilitating the improvement of the buffering, accommodating and other functions of the first accommodating groove 211.

Certainly, the present application is not limited thereto. For example, in some embodiments of the present application, the post body 2 may not be provided with the first accommodating groove 211, but is only provided with the liquid passing hole 23. The liquid filling hole 31 is opposite to and communicates with the liquid passing hole 23, so that the liquid filling requirements can also be met.

It can be understood that the post cover plate 3 is located on an outer side (i.e., a side away from the accommodating cavity 1A) of at least part of the post body 2, so that the post cover plate 3 is in a form of covering the post body 2. In this way, the liquid filling hole 31 in the post cover plate 3 can be located upstream of the communication channel 2A in the post body 2. However, it is worth noting that the manner of assembling the post cover plate 3 and the post body 2 is not limited, for example, the post cover plate 3 may be completely located on the outer side (i.e., the side away from the accommodating cavity 1A) of the post body 2, or the post cover plate 3 may also be partially embedded in the post body 2.

For example, in some embodiments of the present application, as shown in FIG. 6, at least part of the post cover plate 3 is embedded in the first accommodating groove 211. Since the first accommodating groove 211 is used as a part of the communication channel 2A, it indicates that a cavity is formed between the post cover plate 3 and the groove wall of the first accommodating groove 211. In this way, while the post cover plate 3 occupies the space in the first accommodating groove 211, it is ensured that there is also a space in the first accommodating groove 211 for the electrolyte to flow, so that the electrolyte injected from the liquid filling hole 31 of the post cover plate 3 can enter the liquid passing hole 23 through the cavity, thereby meeting the liquid filling requirements. Moreover, the cavity can also play a role in buffering the electrolyte, thereby improving the problem of splashing, overflowing, or the like of the electrolyte. In addition, during use of the battery cell 102, the cavity may be used to buffer the gas generated in the battery cell 102 or the electrolyte overflowing from the accommodating cavity 1A, thereby helping improve the working reliability of the battery cell 102; and during production of the battery cell 102, the cavity may also buffer the injected electrolyte, thereby improving the overflowing of the electrolyte, and raising the liquid filling efficiency. Furthermore, at least part of the post cover plate 3 is embedded in the first accommodating groove 211, which can reduce the space occupied by the post cover plate 3 outside the post body 2 to improve structural compactness.

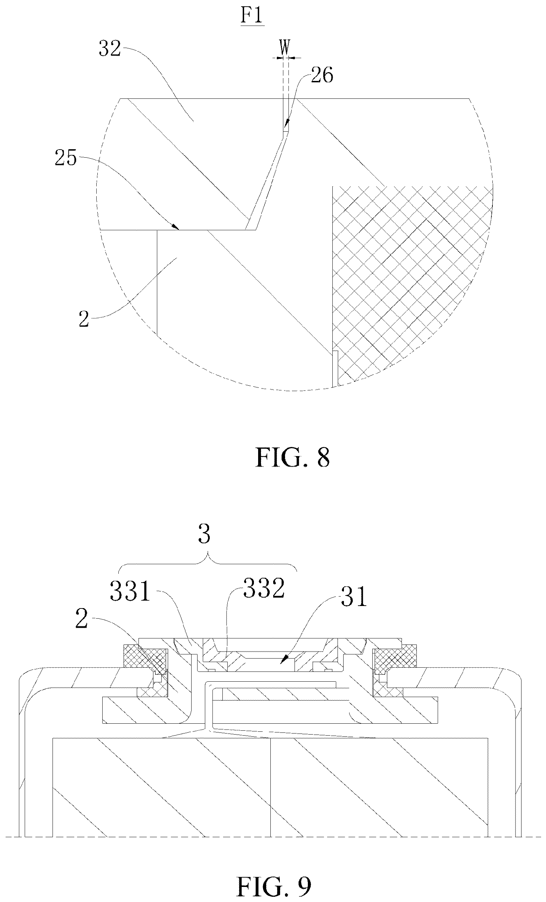

In some embodiments of the present application, as shown in FIG. 7 and FIG. 8, an edge of the post cover plate 3 is provided with a lap joint portion 32, and the lap joint portion 32 laps on a side of the post body 2 away from the accommodating cavity 1A. Thus, the fit and connection between the post cover plate 3 and the post body 2 are facilitated, and the height of the cavity between the post cover plate 3 and the groove wall of the first accommodating groove 211 is easily controlled, so that the volume of the cavity meets the design requirements.

Exemplarily, as shown in FIG. 7 and FIG. 8, when the communication channel 2A includes the first accommodating groove 211, a side surface of the post body 2 away from the accommodating cavity 1A is provided with a recessed groove 25 surrounding the first accommodating groove 211, and at least part of the lap joint portion 32 is embedded in the recessed groove 25, so that the lap joint portion 32 laps on a side of the post body 2 away from the accommodating cavity 1A. Thus, the recessed groove 25 can be used for positioning to improve the assembly efficiency of the post body 2 and the post cover plate 3, and the recessed groove 25 can be used for limiting to a certain extent to improve the stability and reliability of fit between the post body 2 and the post cover plate 3. In addition, the recessed groove 25 is provided, enabling the post cover plate 3 to be further embedded in the post body 2. As a result, the post cover plate 3 protrudes less or even does not protrude from the post body 2, thereby reducing the occupied space outside the post body 2.

In some embodiments, when the lap joint portion 32 is welded to the post body 2 and the post body 2 is provided with the liquid passing hole 23, the lap joint portion 32 can be away from the liquid passing hole 23, and when the electrolyte overflows through the liquid passing hole 23, the electrolyte can be away from a welding joint between the lap joint portion 32 and the post body 2, thereby improving the problems such as corrosion and contamination caused to the welding joint. It is worth noting that the manner of welding between the lap joint portion 32 and the post body 2 is not limited. For example, thermal fusion welding or brazing may be employed. Exemplarily, the lap joint portion 32 and the post body 2 may be continuously laser-welded.

In some embodiments of the present application, as shown in FIG. 7 and FIG. 8, a fit clearance 26 is provided between the lap joint portion 32 and a side wall of the recessed groove 25, where the size W of an end of the fit clearance 26 away from the accommodating cavity 1A is less than 0.05 mm, that is, the fit clearance 26 is greater than 0 mm and less than 0.05 mm. Thus, on the one hand, the lap joint portion 32 of the post cover plate 3 can be smoothly assembled with the recessed groove 25 of the post body 2, and on the other hand, the fit clearance 26 between the lap joint portion and the side wall of the recessed groove is not too large, and when the lap joint portion 32 and the post body 2 are connected by means of welding, the welding yield of the lap joint portion 32 and the post body 2 can be improved.

In some embodiments of the present application, the shape of the post cover plate 3 matches the cross-sectional shape of the first accommodating groove 211. Thus, the first accommodating groove 211 can be covered by the post cover plate 3, and after the liquid filling hole 31 in the post cover plate 3 is sealed, the first accommodating groove 211 can be sealed, thereby simplifying the sealing measure for the first accommodating groove 211, saving the use of parts, simplifying the structure, facilitating the assembly, and reducing the cost. Further, the lap joint portion 32 matches the recessed groove 25 in terms of the cross-sectional shape, thereby better ensuring that the fit clearance 26 between the lap joint portion 32 and the side wall of the recessed groove 25 is uniform.

In some embodiments of the present application, as shown in FIG. 7 and FIG. 8, the post body 2 may include an outer stop portion 271 located outside the housing 1 and an inner stop portion 272 located inside the housing 1, where the lap joint portion 32 laps on the outer stop portion 271, and the post body 2 is riveted to the housing 1 to form the outer stop portion 271. That is, the post body 2 is fixed to the housing 1 by means of riveting, and the outer stop portion 271 is formed after the post body 2 is riveted. In other words, the outer stop portion 271 is not formed before the post body 2 is riveted, and the outer stop portion 271 can be formed after the post body is riveted. For example, the post body 2 may be formed by means of a stamping process, and then the post body 2 is fixed to the housing 1 by means of riveting.

Thus, the pre-processing (such as a stamping process) before the post body 2 is riveted can be simplified to conveniently obtain the outer stop portion 271, and when the structure of the outer stop portion 271 is relatively complex, a die (such as a stamping die) for pre-processing the post body 2 can be simplified, thereby reducing the production cost. Moreover, the post body 2 riveted to the housing 1 may be an integrally formed part, so that the post body 2 can be reliably connected to the housing 1, and the connection between the outer stop portion 271 and the inner stop portion 272 is stable and reliable, which is beneficial to improving the reliability of connection between the post body 2 and the post cover plate 3.

Certainly, the present application is not limited thereto. For example, in other embodiments, the inner stop portion 272 may also be processed by means of riveting. Alternatively, in other embodiments, the post body 2 may also be obtained by means of other processes other than riveting, for example, the post body 2 may be divided into two parts and the two parts are connected by means of welding to be fixed to the housing 1.

Exemplarily, as shown in FIG. 7, the battery cell 102 may further include a sealing gasket 1023 (such as a sealing ring) and an insulating gasket 1024 (such as a plastic gasket), where the sealing gasket 1023 and the insulating gasket 1024 are sandwiched between the post body 2 and the housing 1. The post body 2 is riveted to the housing 1, so that the sealing gasket 1023 and the insulating gasket 1024 are fixed between the post body 2 and the housing 1, which can improve production efficiency and avoid adverse thermal effects of a welding process on the sealing gasket 1023 and the insulating gasket 1024. For example, during riveting, a compression amount of the sealing gasket 1023 (i.e., a difference between a thickness of the sealing gasket 1023 after deformation and a thickness before deformation divided by the thickness before deformation) may be greater than or equal to 15%, thereby ensuring the sealing performance.

In some embodiments of the present application, the liquid filling hole 31 is formed in a post cover plate 3 of a negative electrode, and the post cover plate 3 of the negative electrode and a post body 2 of the negative electrode are made of a same material. Exemplarily, the post cover plate 3 is welded to the post body 2, and the post cover plate 3 is also welded to a busbar component 103. When the post cover plate 3 and the post body 2 are made of the same material, the welding yield thereof is relatively high. When the post cover plate 3 and the busbar component 103 are made of the same material, the welding yield thereof is relatively high. The post body 2 of the negative electrode is usually made of aluminum, and the busbar component 103 of the negative electrode is usually made of the aluminum. Accordingly, the post cover plate 3 of the negative electrode may also be made of the aluminum, so that the post cover plate 3 of the negative electrode, the post body 2 of the negative electrode and the busbar component 103 of the negative electrode each have a better welding yield. When the liquid filling hole 31 is formed in the post cover plate 3 of the negative electrode, the electrolyte flows to a welding joint between the post cover plate 3 of the negative electrode and the post body 2 of the negative electrode. Since the welding joint is a combination of the same material (such as aluminum and aluminum), the welding joint is not easily corroded, which is beneficial to improving the reliability of connection between the post cover plate 3 and the post body 2.

In some embodiments of the present application, referring to FIG. 9, the post cover plate 3 includes a first cover plate portion 331 and a second cover plate portion 332, where the first cover plate portion 331 is made of the same material as the post body 2, the first cover plate portion 331 is connected to the post body 2, the second cover plate portion 332 is connected to the first cover plate portion 331, and the liquid filling hole 31 is formed in the first cover plate portion 331 or the second cover plate portion 332. In the above technical solution, when the liquid filling hole 31 is formed in the post cover plate 3 made of a composite material and the first cover plate portion 331 and the post body 2 are made of the same material, the electrolyte flows to a welding joint between the first cover plate portion 331 and the post body 2. Since the welding joint is a combination of the same material, the welding joint is not easily corroded, which is beneficial to improving the reliability of connection between the post cover plate 3 and the post body 2.

It is worth noting that the manner of assembling the first cover plate portion 331 and the second cover plate portion 332 is not limited. For example, an orthographic projection is made along an axial direction of the liquid filling hole 31. An orthographic projection of the first cover plate portion 331 and an orthographic projection of the second cover plate portion 332 have a non-overlapping part. The liquid filling hole 31 may be formed in the non-overlapping part, so that the injected electrolyte is less likely to cause corrosion and contamination to the welding joint between the first cover plate portion 331 and the second cover plate portion 332, thereby improving the reliability of the post cover plate 3.

Exemplarily, a post body 2 of the positive electrode is usually made of copper, and a busbar component 103 of the positive electrode is usually made of aluminum. If a post cover plate 3 of the positive electrode is made of aluminum, when the liquid filling hole 31 is formed in the post cover plate 3 of the positive electrode, the electrolyte flows to a welding joint between the post cover plate 3 of the positive electrode and the post body 2 of the positive electrode. Since the welding joint is a combination of different materials (such as aluminum and copper), the welding joint is easily corroded. In view of this, in some embodiments of the present application, the post cover plate 3 of the positive electrode may be made of a copper-aluminum composite material, the first cover plate portion 331 of the post cover plate 3 of the positive electrode formed from a copper material is welded to the post body 2 of the positive electrode, and the second cover plate portion 332 of the post cover plate 3 of the positive electrode formed from an aluminum material is welded to the busbar component 103 of the positive electrode, so that the post cover plate 3 of the positive electrode, the post body 2 of the positive electrode, and the busbar component 103 of the positive electrode each have a better welding yield. In this way, when the liquid filling hole 31 is formed in the post cover plate 3 of the positive electrode made of the composite material, the liquid filling hole may be formed in the first cover plate portion 331 or the second cover plate portion 332, and the electrolyte flows to the welding joint between the post cover plate 3 of the positive electrode and the post body 2 of the positive electrode. Since the welding joint is a combination of the same material (such as copper and copper), the welding joint is not easily corroded, which is beneficial to improving the reliability of connection between the post cover plate 3 and the post body 2.

In some embodiments, as shown in FIG. 5 and FIG. 6, the battery cell 102 further includes a battery core assembly 7. The battery core assembly 7 includes an active material coating portion 71 and a conductive portion 72. The active material coating portion 71 is accommodated in the accommodating cavity 1A, and the conductive portion 72 is connected to the active material coating portion 71. Exemplarily, the conductive portion 72 may be connected to the post structure 1020 to form an electrical connection, so that the battery core assembly 7 is output from the electrode at the post structure 1020. For example, the conductive portion 72 may be welded to the post structure 1020 to achieve the connection. It can be understood that the active material coating portion 71 may include a current collector coated with an active material layer, and the conductive portion 72 may include only a tab portion, or may include a tab portion and an adapter piece electrically connected to the tab portion, etc., without limitation herein.

As shown in FIG. 5 and FIG. 6, the post body 2 is provided with a communication hole 22 communicating the first accommodating groove 211 with the accommodating cavity 1A, one or more communication holes 22 are provided, at least one communication hole 22 serves as the liquid passing hole 23, and the conductive portion 72 passes through the at least one communication hole 22 to be at least partially accommodated in the first accommodating groove 211. Exemplarily, the post body 2 is provided with a first accommodating groove 211 and a communication hole 22, the first accommodating groove 211 is open in a direction away from the accommodating cavity 1A to communicate with the liquid filling hole 31, the communication hole 22 is located on a side of the first accommodating groove 211 close to the accommodating cavity 1A, the communication hole 22 penetrates through a side groove wall of the first accommodating groove 211 close to the accommodating cavity 1A to communicate the first accommodating groove 211 with the accommodating cavity 1A, at least one communication hole 22 is the liquid passing hole 23, and the conductive portion 72 may pass through the communication hole 22 serving as the liquid passing hole 23 (that is, the communication hole 22 through which the conductive portion 72 passes can still be used for the electrolyte to flow through after being passed by the conductive portion 72), or may pass through the communication hole 22 not serving as the liquid passing hole 23 (that is, the communication hole 22 through which the conductive portion 72 passes cannot be used for the electrolyte to flow through after being passed by the conductive portion 72).

In view of this, at least part of the conductive portion 72 is accommodated in the first accommodating groove 211, so that at least part of the conductive portion 72 occupies the space in the first accommodating groove 211, thereby reducing the space occupied by the conductive portion 72 in the accommodating cavity 1A, saving the space in the accommodating cavity 1A to accommodate the active material coating portion 71 with a larger volume, and increasing the energy density of the battery cell 102, or reducing the size of the battery cell 102 in the case where the energy density of the battery cell 102 is unchanged.

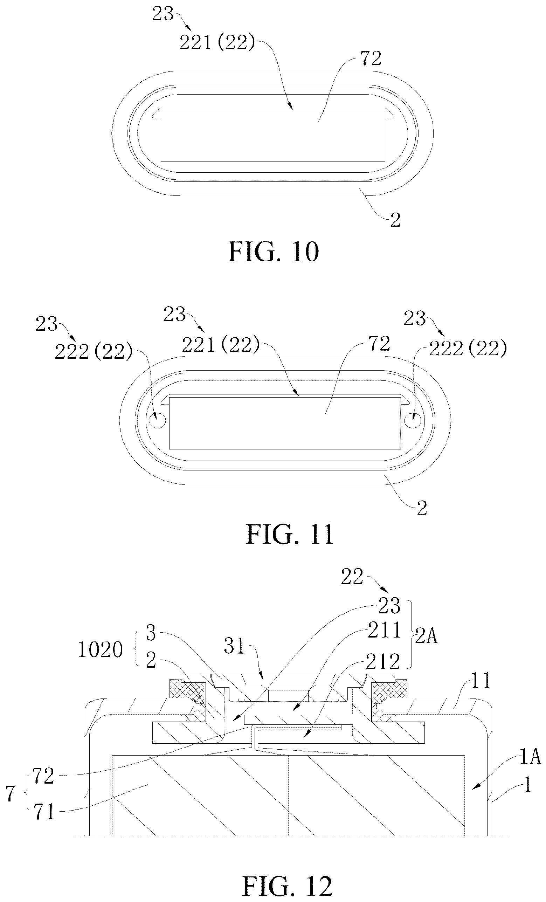

In some embodiments, referring to FIG. 10, the communication hole 22 through which the conductive portion 72 passes is a first communication hole 221 (that is, at least one communication hole 22 is passed by the conductive portion 72, and the communication hole 22 through which the conductive portion 72 passes is the first communication hole 221), and at least the first communication hole 221 may serve as the liquid passing hole 23. In this way, when the post body 2 is provided with the first communication hole 221 through which the conductive portion 72 passes, regardless of whether the post body 2 is provided with a second communication hole 222 through which the conductive portion 72 does not pass described below, the first communication hole 221 through which the conductive portion 72 passes has a liquid passing function, that is, the first communication hole 221 still has a liquid passing gap after being passed by the conductive portion 72. During liquid filling, the electrolyte may be injected into the first accommodating groove 211 through the liquid filling hole 31, and then at least part of the electrolyte may flow into the accommodating cavity 1A from the first communication hole 221 through which the conductive portion 72 passes.

In some embodiments, referring to FIG. 11, the communication hole 22 through which the conductive portion 72 passes is the first communication hole 221, a plurality of communication holes 22 are provided, at least one second communication hole 222 through which the conductive portion 72 does not pass is further included (that is, at least one communication hole 22 is not passed by the conductive portion 72, and the communication hole 22 through which the conductive portion 72 does not pass is the second communication hole 222), and at least the second communication hole 222 may serve as the liquid passing hole 23.

For example, when the first communication hole 221 has a liquid passing function (that is, the first communication hole 221 still has a liquid passing gap after being passed by the conductive portion 72), the first communication hole 221 and the second communication hole 222 both serve as the liquid passing hole 23. During liquid filling, the electrolyte is injected into the first accommodating groove 211 through the liquid filling hole 31, and then a part of the electrolyte may flow into the accommodating cavity 1A from the first communication hole 221 through which the conductive portion 72 passes, and the rest part of the electrolyte may flow into the accommodating cavity 1A from the second communication hole 222 through which the conductive portion 72 does not pass.

For another example, when the first communication hole 221 does not have a liquid passing function (that is, the first communication hole 221 is sealed after being passed by the conductive portion 72 and becomes impermeable to liquid), only the second communication hole 222 serves as the liquid passing hole 23. During liquid filling, the electrolyte is injected into the first accommodating groove 211 through the liquid filling hole 31 and then flows into the accommodating cavity 1A only from the second communication hole 222 through which the conductive portion 72 does not pass.

In the embodiments of the present application, when at least the first communication hole 221 serves as the liquid passing hole 23, the first communication hole 221 has a liquid passing function, that is, the first communication hole 221 can be used for the electrolyte to pass through after being passed by the conductive portion 72. In this case, the electrolyte can pass through at least the first communication hole 221, so that whether to form a communication hole 22 (such as a second communication hole 222) through which the conductive portion 72 does not pass can be selected as required, thereby reducing the total number of communication holes 22, simplifying the structure and processing of the post body 2, and improving the structural strength of the post body 2.

In the embodiments of the present application, when at least the second communication hole 222 serves as the liquid passing hole 23, the electrolyte can pass through at least the second communication hole 222. In this case, there is no need to set the diameter or the number of the first communication holes 221 to be large for the electrolyte to pass through the first communication holes 221, nor is it necessary to set the size of the conductive portion 72 to be small for the electrolyte to pass through the first communication hole 221. It is only necessary to design the size of the first communication hole 221 to be slightly larger than the size of the conductive portion 72 so that the conductive portion 72 can pass through. Thus, the problem that impurities and the like fall into the accommodating cavity 1A from a gap between the conductive portion 72 and the first communication hole 221 can be improved, the problem that the local strength of the post body 2 is weak due to the excessive size of the first communication hole 221 can also be improved, and the size of the conductive portion 72 can be made relatively large, which is beneficial to improving the current transfer efficiency. Moreover, since the electrolyte is not affected by the conductive portion 72 when passing through the second communication hole 222, the liquid filling efficiency can be improved, and the electrolyte is less likely to cause problems such as contamination and corrosion to the conductive portion 72.

For example, in Example 1 of the present application, there is at least one communication hole 22, and each communication hole 22 is passed by the conductive portion 72, so each communication hole 22 is the first communication hole 221. In this case, at least one first communication hole 221 forms the liquid passing hole 23. After the electrolyte is injected into the first accommodating groove 211 through the liquid filling hole 31, the electrolyte flows into the accommodating cavity 1A from the first communication hole 221 through which the conductive portion 72 passes.

For example, in Example 2 of the present application, there are at least two communication holes 22, where at least one communication hole 22 is the first communication hole 221 through which the conductive portion 72 passes, and at least one communication hole 22 is the second communication hole 222 through which the conductive portion 72 does not pass. In this case, the first communication hole 221 and the second communication hole 222 both form the liquid passing hole 23. After the electrolyte is injected into the first accommodating groove 211 through the liquid filling hole 31, a part of the electrolyte flows into the accommodating cavity 1A from the first communication hole 221 through which the conductive portion 72 passes, and the rest part of the electrolyte flows into the accommodating cavity 1A from the second communication hole 222 through which the conductive portion 72 does not pass.

For example, in Example 3 of the present application, there are at least two communication holes 22, at least one communication hole 22 is the first communication hole 221 through which the conductive portion 72 passes, and at least one communication hole 22 is the second communication hole 222 through which the conductive portion 72 does not pass. When the first communication hole 221 is sealed after being passed by the conductive portion 72 and becomes impermeable to liquid, only the second communication hole 222 forms the liquid passing hole 23, and the electrolyte is injected into the first accommodating groove 211 through the liquid filling hole 31 and then flows into the accommodating cavity 1A from the second communication hole 222 through which the conductive portion 72 does not pass.

In some embodiments, the first accommodating groove 211 is open in the direction away from the accommodating cavity 1A, the groove opening of the first accommodating groove 211 is located on a side of the first accommodating groove 211 away from the accommodating cavity 1A, a side groove wall of the first accommodating groove 211 close to the accommodating cavity 1A is a bottom groove wall 2110, the conductive portion 72 is connected to the bottom groove wall 2110 to form a first connecting portion 73, and an orthographic projection of the liquid filling hole 31 on the bottom groove wall 2110 is offset from the first connecting portion 73, where "offset from" means that there is no overlap.

For example, when the conductive portion 72 is welded to the bottom groove wall 2110 of the first accommodating groove 211 to form a weld mark, the orthographic projection of the liquid filling hole 31 on the bottom groove wall 2110 of the first accommodating groove 211 may be offset from the weld mark. Thus, the electrolyte injected from the liquid filling hole 31 can avoid the first connecting portion 73 (such as the weld mark) between the conductive portion 72 and the post body 2 as much as possible, thereby reducing the contamination and corrosion of the first connecting portion 73 (such as the weld mark) caused by the electrolyte.

In some embodiments, referring to FIG. 7 and FIG. 8, the post body 2 is formed into an elongated structure, and the first communication hole 221 through which the conductive portion 72 passes is formed into an elongated hole with a length greater than a width and a length direction extending from one end to the other end of a length of the post body 2. Thus, the space of the post body 2 can be fully utilized, and the length of the first communication hole 221 can be increased as much as possible, so that the first communication hole 221 can be passed by the conductive portion 72 with a larger size, which is beneficial to the increase in the size of the conductive portion 72, thereby improving the current transfer efficiency. When the first communication hole 221 serves as the liquid passing hole 23, the length of the first communication hole 221 is increased, which is also beneficial to improving the liquid filling efficiency.

In some embodiments, referring to FIG. 3 to FIG. 6, when the post body 2 is formed into an elongated structure, and the first communication hole 221 through which the conductive portion 72 passes is formed into an elongated hole with a length greater than a width and a length direction extending from one end to the other end of a length of the post body 2, the post cover plate 3 is a long cover plate, that is, the length of the post cover plate 3 is greater than the width, and the liquid filling hole 31 is eccentrically formed in a length direction of the post cover plate 3, that is, the liquid filling hole 31 is located on a side of a center point of the post cover plate 3 in the length direction of the post cover plate 3. Thus, the liquid filling hole 31 can avoid the conductive portion 72 as much as possible, thereby reducing the contamination and corrosion of the first connecting portion 73 (such as the weld mark) between the conductive portion 72 and the post body 2 caused by the injected electrolyte.

In addition, since the post body 2 is formed into the elongated structure and the post cover plate 3 is the long cover plate, the full fit between the post body 2 and the post cover plate 3 is facilitated, the area of the post cover plate 3 is conveniently increased, and the assembly connection between the post cover plate 3 and the post body 2 is facilitated. Exemplarily, the shape of the post cover plate 3 may be an oblong shape, a rectangle, an ellipse, or the like. The oblong shape may also be referred to as a racetrack shape, that is, it is formed by splicing semicircles at two ends of the length of a rectangle respectively. The liquid filling hole 31 may be located in a semicircular region or at a boundary between the semicircular region and a rectangular region. Certainly, the present application is not limited thereto. In other embodiments of the present application, the liquid filling hole 31 may also be centrally formed in the post cover plate 3, etc., that is, the position of the liquid filling hole 31 may be flexibly selected according to actual situations.

In some embodiments of the present application, the post body 2 is formed into an elongated structure, and the first accommodating groove 211 is formed into an elongated groove body, that is, the length of the first accommodating groove 211 is greater than the width, and the length direction of the first accommodating groove 211 extends from one end to the other end of the length of the post body 2, thereby making full use of the space of the post body 2 to increase the size of the first accommodating groove 211 and improve the liquid filling efficiency.

In some embodiments of the present application, a side groove wall of the first accommodating groove 211 close to the accommodating cavity 1A may be set as an inclined surface extending obliquely downward in a direction of the liquid passing hole 23, so that the electrolyte in the first accommodating groove 211 can quickly flow in the direction of the liquid passing hole 23, thereby raising the liquid filling efficiency, and improving the liquid accumulation problem of the first accommodating groove 211.

In some embodiments of the present application, the cross-sectional shape of the post body 2 may be set to match the cross-sectional shape of the first accommodating groove 211, so that the space can be fully utilized, and the size of the first accommodating groove 211 can be increased as much as possible, to increase the buffer capacity of the first accommodating groove 211.

In some embodiments of the present application, when the first accommodating groove 211 is formed into an elongated groove body, exemplarily, the cross-sectional shape of the first accommodating groove 211 may be set to be an oblong shape, a rectangle, an ellipse, or the like, so that flexible setting can be achieved. The oblong shape may also be referred to as a racetrack shape, that is, it is formed by splicing semicircles at two ends of the length of a rectangle respectively.

In some embodiments, when the communication hole 22 through which the conductive portion 72 passes is a first communication hole 221, there are a plurality of first communication holes 221 and a plurality of conductive portions 72, and each first communication hole 221 is passed by at least one conductive portion 72. In this case, at least two communication holes 22 are passed by the conductive portions 72 respectively, so that the problem that the local strength of the post body 2 is weak due to the large size of a single first communication hole 221 can be improved. Moreover, if the first communication hole 221 serves as the liquid passing hole 23, the liquid filling efficiency can be improved by increasing the number of the first communication holes 221.

Exemplarily, when the first communication hole 221 is formed into an elongated hole with a length greater than a width and a length direction extending from one end to the other end of a length of the post body 2, a plurality of first communication holes 221 may be disposed at intervals along a width direction of the post body 2. In this way, the space on the post body 2 can be fully utilized, and the problem of weakness in the local strength of the post body 2 caused by the large size of the single first communication hole 221 can be improved. Moreover, if the first communication hole 221 serves as the liquid passing hole 23, the liquid filling efficiency can be improved by increasing the number of the first communication holes 221.

In some embodiments, referring to FIG. 11, when the post body 2 is provided with both a first communication hole 221 and a second communication hole 222, if the first communication hole 221 is formed into an elongated hole with a length greater than a width and a length direction extending from one end to the other end of a length of the post body 2, the second communication hole 222 may be formed in at least one of two ends of the length of the first communication hole 221, so that the electrolyte can be relatively far away from the weld mark between the conductive portion 72 and the post body 2, thereby reducing the contamination or corrosion of the weld mark caused by the injected electrolyte. Moreover, when the second communication holes 222 are formed in both ends of the length of the first communication hole 221, the liquid filling efficiency can be improved, the size of each second communication hole 222 can be reduced, and the problem of local weakness of the post body 2 can be improved.

Certainly, in the embodiments of the present application, the shape of the first communication hole 221 and the relative positional relationship between the first communication hole 221 and the second communication hole 222 are not limited to the above description, and may be adjusted according to actual situations.

Certainly, the present application is not limited thereto. In other embodiments of the present application, the conductive portion 72 may neither pass through the communication hole 22 nor extend into the first accommodating groove 211. In this case, as shown in FIG. 12, the conductive portion 72 may be connected to a side wall surface of the post body 2 facing the accommodating cavity 1A, so that the entire conductive portion 72 is located on a side of the first accommodating groove 211 close to the accommodating cavity 1A, and each communication hole 22 may serve as the liquid passing hole 23. Thus, when the electrolyte injected from the liquid filling hole 31 enters the first accommodating groove 211, the electrolyte does not contact the first connecting portion 73 (such as the weld mark) between the conductive portion 72 and the post body 2, so that the contamination and corrosion of the first connecting portion 73 between the conductive portion 72 and the post body 2 caused by the injected electrolyte can be reduced, and the formation position of the liquid filling hole 31 can be flexibly selected. Consequently, there is no need to select the position of the liquid filling hole 31 in order to avoid the first connecting portion 73 between the conductive portion 72 and the post body 2.

In some embodiments, as shown in FIG. 7, the communication channel 2A further includes a second accommodating groove 212, where the second accommodating groove 212 is located on a side of the first accommodating groove 211 close to the accommodating cavity 1A, the second accommodating groove 212 is open in a direction of the accommodating cavity 1A to communicate with the accommodating cavity 1A, and the post body 2 is provided with a communication hole 22 communicating the first accommodating groove 211 with the second accommodating groove 212. There are one or more communication holes 22, and at least one communication hole 22 serves as the liquid passing hole 23, so that the liquid passing hole 23 penetrates through a groove wall of the second accommodating groove 212 to communicate the first accommodating groove 211 with the second accommodating groove 212.

When the electrolyte needs to be injected into the accommodating cavity 1A of the battery cell 102, the electrolyte can be injected into the liquid filling hole 31. Because the liquid filling hole 31 communicates with the first accommodating groove 211, the electrolyte entering the liquid filling hole 31 can flow into the first accommodating groove 211. Because the first accommodating groove 211 communicates with the second accommodating groove 212 through the communication hole 22 and at least one communication hole 22 is the liquid passing hole 23 allowing the electrolyte to pass through, the electrolyte entering the first accommodating groove 211 can flow into the second accommodating groove 212 through the liquid filling hole 23. Because the second accommodating groove 212 communicates with the accommodating cavity 1A, the electrolyte flowing into the second accommodating groove 212 can enter the accommodating cavity 1A, thereby achieving the injection of the electrolyte into the accommodating cavity 1A through the liquid filling hole 31, the first accommodating groove 211, the liquid passing hole 23, and the second accommodating groove 212.

Thus, the second accommodating groove 212 can play a role in buffering the electrolyte or gas. When the battery cell 102 is filled with the electrolyte, the electrolyte can be buffered by using the second accommodating groove 212 to improve the problem of splashing, overflowing, or the like of the electrolyte; and when the battery cell 102 works, the electrolyte generates gas after participating in a reaction, and the electrolyte or the gas generated in the accommodating cavity 1A can be buffered by using the second accommodating groove 212, thereby improving the problem of electrolyte overflowing or excessive gas pressure in the accommodating cavity 1A, and enhancing the reliability of the battery cell 102.

In some embodiments, as shown in FIG. 7, when the post body 2 is provided with the second accommodating groove 212, the conductive portion 72 may pass through at least one communication hole 22 and extend into the first accommodating groove 211. The hole through which the conductive portion 72 passes is the first communication hole 221. In this case, the first communication hole 221 may serve as the liquid passing hole 23. The first communication hole 221 may not serve as the liquid passing hole 23, and the communication hole 22 communicating the first accommodating groove 211 with the second accommodating groove 212 may be set to further include at least one second communication hole 222 through which the conductive portion 72 does not pass. The second communication hole 222 may serve as the liquid passing hole 23. Reference can be made to the above description of the embodiment without the second accommodating groove 212, which will not repeated herein.

Exemplarily, when the post body 2 is provided with the second accommodating groove 212, as shown in FIG. 12, the conductive portion 72 may not pass through the communication hole 22 to be entirely located on a side of the first accommodating groove 211 close to the accommodating cavity 1A, for example, the conductive portion 72 is connected to a side wall surface of the post body 2 facing the accommodating cavity 1A, so that the conductive portion 72 is connected to a side groove wall of the second accommodating groove 212 away from the accommodating cavity 1A (for example, a top groove wall of the second accommodating groove 212). In this case, at least part of the conductive portion 72 may be accommodated in the second accommodating groove 212, thereby reducing the space occupied by the conductive portion 72 in the accommodating cavity 1A, saving the space in the accommodating cavity 1A to accommodate the active material coating portion 71 with a larger volume, and increasing the energy density of the battery cell 102, or reducing the size of the battery cell 102 in the case where the energy density of the battery cell 102 is unchanged.

Moreover, as shown in FIG. 12, when the post body 2 is provided with the second accommodating groove 212, and the conductive portion 72 is connected to a side wall surface of the post body 2 facing the accommodating cavity 1A, each communication hole 22 may serve as the liquid passing hole 23. Thus, when the electrolyte injected from the liquid filling hole 31 enters the first accommodating groove 211, the electrolyte does not contact the first connecting portion 73 (such as the weld mark) between the conductive portion 72 and the post body 2 in the second accommodating groove 212, so that the contamination and corrosion of the first connecting portion 73 between the conductive portion 72 and the post body 2 caused by the injected electrolyte can be reduced, and the formation position of the liquid filling hole 31 can be flexibly selected. Consequently, there is no need to select the position of the liquid filling hole 31 in order to avoid the first connecting portion 73 between the conductive portion 72 and the post body 2.

In some embodiments of the present application, the liquid filling hole 31 is opposite to the liquid passing hole 23. That is, an orthographic projection is made along the axial direction of the liquid filling hole 31, and an orthographic projection of the liquid passing hole 23 at least partially overlaps with the orthographic projection of the liquid filling hole 31. Thus, the electrolyte injected through the liquid filling hole 31 can directly flow in the direction of the liquid passing hole 23 opposite to the liquid filling hole 31, so that liquid filling can be achieved more quickly and efficiently, and the liquid filling efficiency can be improved. It is worth noting that the number of the liquid filling holes 31 and the number of the liquid passing holes 23 are both not limited, and there may be at least one liquid filling hole 31, or at least one liquid passing hole 23, as long as at least one liquid filling hole 31 is opposite to at least one liquid passing hole 23. In addition, it is worth noting that the shapes of the liquid filling hole 31 and the liquid passing hole 23 may be same or different, and both may be flexibly selected according to actual situations.

Exemplarily, when the communication hole 22 does not include the second communication hole 222, but only includes the first communication hole 221, the first communication hole 221 serves as the liquid passing hole 23. In this case, the liquid filling hole 31 may be opposite to the first communication hole 221, that is, an orthographic projection is made along the axial direction of the liquid filling hole 31, and an orthographic projection of the first communication hole 221 at least partially overlaps with the orthographic projection of the liquid filling hole 31. Thus, the electrolyte injected through the liquid filling hole 31 can directly flow in the direction of the first communication hole 221 opposite to the liquid filling hole 31, so that liquid filling can be achieved more quickly and efficiently, and the liquid filling efficiency can be improved.

Exemplarily, when the post body 2 is provided with both the first communication hole 221 and the second communication hole 222, and at least the second communication hole 222 serves as the liquid passing hole 23, the second communication hole 222 may be opposite to the liquid filling hole 31, that is, an orthographic projection is made along the axial direction of the liquid filling hole 31, and an orthographic projection of the second communication hole 222 at least partially overlaps with the orthographic projection of the liquid filling hole 31. Thus, the electrolyte injected through the liquid filling hole 31 can directly flow in the direction of the second communication hole 222 opposite to the liquid filling hole 31, so that liquid filling can be achieved more quickly and efficiently, and the liquid filling efficiency can be improved.

Further, the first communication hole 221 may be set to be offset from the liquid filling hole 31, that is, an orthographic projection is made along the axial direction of the liquid filling hole 31, and the orthographic projection of the first communication hole 221 does not overlap with the orthographic projection of the liquid filling hole 31, so that the electrolyte injected from the liquid filling hole 31 can avoid the direction of the first communication hole 221, thereby reducing the risk of the electrolyte contaminating the first connecting portion 73 between the conductive portion 72 passing through the first communication hole 221 and the post body 2. However, the present application is not limited thereto. In some embodiments of the present application, the liquid filling hole 31 may also be set to be opposite to both the second communication hole 222 and the first communication hole 221 as required.

In addition, when the conductive portion 72 is connected to a side wall surface of the post body 2 facing the accommodating cavity 1A (regardless of whether the communication channel 2A includes the second accommodating groove 212), each communication hole 22 may serve as the liquid passing hole 23. In some embodiments, the liquid filling hole 31 may be set to be opposite to at least one communication hole 22, and each communication hole 22 is offset from the first connecting portion 73 (such as the weld mark) between the conductive portion 72 and the post body 2, that is, an orthographic projection is made along the axial direction of the liquid filling hole 31, and an orthographic projection of each communication hole 22 does not overlap with an orthographic projection of the first connecting portion 73, so that the contamination and corrosion of the weld mark by the electrolyte can be reduced on the premise of improving the liquid filling efficiency.

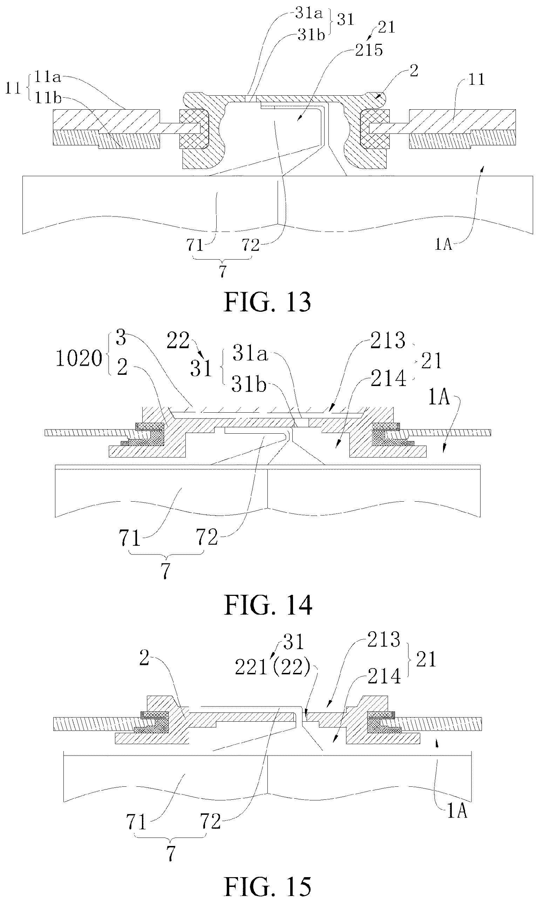

The embodiments of the present application are not limited to the situation where the liquid filling hole 31 is formed in the post cover plate 3. For example, in some embodiments of the present application, the liquid filling hole 31 may be formed in the post body 2. For example, referring to FIG. 13, the post structure 1020 includes a post body 2, where the post body 2 is disposed on the first housing wall 11, the liquid filling hole 31 is formed in the post body 2, an accommodating groove 21 communicating with the liquid filling hole 31 is formed in the post body 2, and the inner hole end 31b of the liquid filling hole 31 in the post body 2 is located on a side of the inner surface 11b of the first housing wall 11 away from the accommodating cavity 1A. Alternatively, further, the inner hole end 31b of the liquid filling hole 31 in the post body 2 may be disposed on a side of the outer surface 11a of the first housing wall 11 away from the accommodating cavity 1A.

It is worth noting that the opening direction of the groove opening of the accommodating groove 21 is not limited. For example, if the groove opening of the accommodating groove 21 is open toward the outer side (that is, the groove opening of the accommodating groove 21 is located on a side of the accommodating groove 21 away from the accommodating cavity 1A), the accommodating groove 21 may communicate with the outer side. In this case, the liquid filling hole 31 may penetrate through a side groove wall of the accommodating groove 21 close to the inner side to communicate with the inner side, so that the accommodating groove 21 communicates with the upstream of the liquid filling hole 31, and the electrolyte may be first injected into the accommodating groove 21 and then enter the accommodating cavity 1A through the liquid filling hole 31. For another example, if the groove opening of the accommodating groove 21 is open toward the inner side (that is, the groove opening of the accommodating groove 21 is located on a side of the accommodating groove 21 close to the accommodating cavity 1A), the accommodating groove 21 may communicate with the inner side. In this case, the liquid filling hole 31 may penetrate through a side groove wall of the accommodating groove 21 away from the accommodating cavity 1A to communicate with the outer side, so that the accommodating groove 21 communicates with the downstream of the liquid filling hole 31, and the electrolyte may be injected into the liquid filling hole 31 first, then enter the accommodating groove 21, and then enter the accommodating cavity 1A.

In view of this, the liquid filling hole 31 is formed in the post body 2, so that the post cover plate 3 can be omitted, or the liquid filling hole 31 can be omitted from the post cover plate 3, thereby simplifying the structure or processing. Moreover, since the post body 2 is provided with the accommodating groove 21 communicating with the liquid filling hole 31, the post body 2 has a large buffer space while meeting the liquid filling requirements, which can play a role in buffering the electrolyte to a certain extent, and is beneficial to reducing the possibility of splashing or overflowing of the electrolyte during manufacturing or use of the battery cell 102.

In some embodiments of the present application, as shown in FIG. 14, the accommodating groove 21 includes a third accommodating groove 213 with a groove opening that is open in a direction away from the accommodating cavity 1A, where the liquid filling hole 31 penetrates through a side groove wall of the third accommodating groove 213 close to the accommodating cavity 1A. In this way, when the electrolyte is injected into the battery cell 102, the electrolyte injected from the outer side of the first housing wall 11 is first injected into the third accommodating groove 213 through the groove opening of the third accommodating groove 213, and the electrolyte entering the third accommodating groove 213 flows toward the accommodating cavity 1A through the liquid filling hole 31.

Thus, the third accommodating groove 213 can play a role in buffering the electrolyte to improve the problem of splashing, overflowing, or the like of the electrolyte. Moreover, the side wall of the third accommodating groove 213 (i.e., the groove wall extending from the groove opening of the third accommodating groove 213 toward the accommodating cavity 1A) can block the electrolyte from splashing to a certain extent, which reduces the contamination of the electrolyte to the outside and facilitates rapid liquid filling. Furthermore, a liquid filling nozzle can be flexibly disposed, for example, an outlet of the liquid filling nozzle can be made large, for example, the outlet of the liquid filling nozzle is set to match the groove opening of the third accommodating groove 213, thereby further improving the liquid filling efficiency. Alternatively, in some optional embodiments, the liquid filling nozzle may also be directly aligned with the liquid filling hole 31 for liquid filling, which is not limited herein.

In some embodiments of the present application, as shown in FIG. 14, the accommodating groove 21 further includes a fourth accommodating groove 214 with a groove opening that is open in a direction of the accommodating cavity 1A, where the fourth accommodating groove 214 is located on a side of the third accommodating groove 213 close to the accommodating cavity 1A, and the liquid filling hole 31 penetrates through a side groove wall of the fourth accommodating groove 214 away from the accommodating cavity 1A to communicate the third accommodating groove 213 with the fourth accommodating groove 214. In this way, when the electrolyte is injected into the battery cell 102, the electrolyte injected from the outer side of the first housing wall 11 is first injected into the third accommodating groove 213 through the groove opening of the third accommodating groove 213, and the electrolyte entering the third accommodating groove 213 enters the fourth accommodating groove 214 through the liquid filling hole 31 and then flows toward the accommodating cavity 1A through the opening of the fourth accommodating groove 214.

In view of this, the fourth accommodating groove 214 is provided, so that the height of the liquid filling hole 31 during liquid filling can be increased, which is beneficial to increasing the total injection amount of the electrolyte and prolonging the cycle life of the battery cell 102. Moreover, when the liquid filling hole 31 is sealed with a relatively long sealing nail, since the liquid filling hole 31 is relatively high and the sealing nail protrudes below the liquid filling hole 31 by a short length or does not protrude below the liquid filling hole 31, the sealing nail is less likely to interfere with or electrically contact the battery core assembly 7 below the post body 2, so that it is not necessary to thicken the lower plastic structure below the post body 2. Consequently, the lower plastic structure can be thinned to reduce the material cost, and the space occupied by the lower plastic structure in the accommodating cavity 1A can be reduced to increase the energy density of the battery cell 102. In addition, the gas generated in the accommodating cavity 1A or the electrolyte that tends to overflow can enter the fourth accommodating groove 214. The fourth accommodating groove 214 can play a buffering role to improve the working reliability of the battery cell 102.

In some embodiments of the present application, the cross-sectional shape of the third accommodating groove 213 and/or the fourth accommodating groove 214 matches the cross-sectional shape of the post body 2. Thus, the space of the post body 2 can be fully utilized, so that the size of the third accommodating groove 213 and/or the fourth accommodating groove 214 is as large as possible, thereby facilitating the improvement of the buffering, accommodating and other functions of the third accommodating groove 213 and/or the fourth accommodating groove 214.

In some embodiments of the present application, the battery cell 102 includes a battery core assembly 7, where the battery core assembly 7 includes an active material coating portion 71 accommodated in the accommodating cavity 1A and a conductive portion 72 connected to the active material coating portion 71. Exemplarily, the conductive portion 72 may be connected to the post body 2 to form an electrical connection, so that the battery core assembly 7 is output from the electrode at the post body 2. For example, the conductive portion 72 may be welded to the post body 2 to achieve the connection. It can be understood that the active material coating portion 71 may include a current collector coated with an active material layer, and the conductive portion 72 may include only a tab portion, or may include a tab portion and an adapter piece electrically connected to the tab portion, etc., without limitation herein.

In some embodiments, as shown in FIG. 15, the post body 2 is provided with a communication hole 22 communicating the third accommodating groove 213 with the accommodating cavity 1A, one or more communication holes 22 are provided, at least one communication hole 22 serves as the liquid filling hole 31, and the conductive portion 72 passes through the at least one communication hole 22 to be at least partially accommodated in the third accommodating groove 213. The conductive portion 72 may pass through the communication hole 22 serving as the liquid filling hole 31 (that is, the communication hole 22 through which the conductive portion 72 passes can still be used for the electrolyte to flow through after being passed by the conductive portion 72), or may pass through the communication hole 22 not serving as the liquid filling hole 31 (that is, the communication hole 22 through which the conductive portion 72 passes cannot be used for the electrolyte to flow through after being passed by the conductive portion 72).

In view of this, at least part of the conductive portion 72 is accommodated in the third accommodating groove 213, so that at least part of the conductive portion 72 occupies the space in the third accommodating groove 213, thereby reducing the space occupied by the conductive portion 72 in the accommodating cavity 1A, saving the space in the accommodating cavity 1A to accommodate the active material coating portion 71 with a larger volume, and increasing the energy density of the battery cell 102, or reducing the size of the battery cell 102 in the case where the energy density of the battery cell 102 is unchanged.

In some embodiments, referring to FIG. 15, the communication hole 22 through which the conductive portion 72 passes is a first communication hole 221 (that is, at least one communication hole 22 is passed by the conductive portion 72, and the communication hole 22 through which the conductive portion 72 passes is the first communication hole 221), and at least the first communication hole 221 may serve as the liquid filling hole 31. In this way, when the post body 2 is provided with the first communication hole 221 through which the conductive portion 72 passes, regardless of whether the post body 2 is provided with a second communication hole 222 through which the conductive portion 72 does not pass described below, the first communication hole 221 through which the conductive portion 72 passes has a liquid passing function, that is, the first communication hole 221 still has a liquid passing gap after being passed by the conductive portion 72. During liquid filling, after the electrolyte is injected into the third accommodating groove 213, at least part of the electrolyte may flow into the accommodating cavity 1A from the first communication hole 221 through which the conductive portion 72 passes. In this case, the electrolyte can pass through at least the first communication hole 221, so that whether to form a communication hole 22 (such as a second communication hole 222) through which the conductive portion 72 does not pass can be selected as required, thereby reducing the total number of communication holes 22, simplifying the structure and processing of the post body 2, and improving the structural strength of the post body 2.

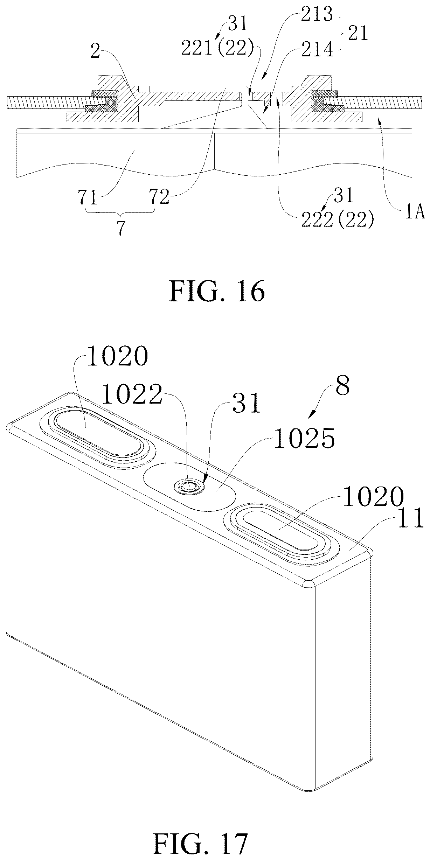

In some embodiments, referring to FIG. 16, the communication hole 22 through which the conductive portion 72 passes is the first communication hole 221, a plurality of communication holes 22 are provided, at least one second communication hole 222 through which the conductive portion 72 does not pass is further included (that is, at least one communication hole 22 is not passed by the conductive portion 72, and the communication hole 22 through which the conductive portion 72 does not pass is the second communication hole 222), and at least the second communication hole 222 may serve as the liquid filling hole 31. In this case, there is no need to set the diameter or the number of the first communication holes 221 to be large for the electrolyte to pass through the first communication holes 221, nor is it necessary to set the size of the conductive portion 72 to be small for the electrolyte to pass through the first communication hole 221. It is only necessary to design the size of the first communication hole 221 to be slightly larger than the size of the conductive portion 72 so that the conductive portion 72 can pass through. Thus, the problem that impurities and the like fall into the accommodating cavity 1A from a gap between the conductive portion 72 and the first communication hole 221 can be improved, the problem that the local strength of the post body 2 is weak due to the excessive size of the first communication hole 221 can also be improved, and the size of the conductive portion 72 can be made relatively large, which is beneficial to improving the current transfer efficiency. Moreover, since the electrolyte is not affected by the conductive portion 72 when passing through the second communication hole 222, the liquid filling efficiency can be improved, and the electrolyte is less likely to cause problems such as contamination and corrosion to the conductive portion 72.

Certainly, the present application is not limited thereto. In other embodiments of the present application, as shown in FIG. 14, the conductive portion 72 may neither pass through the communication hole 22 nor extend into the third accommodating groove 213. In this case, the conductive portion 72 may be connected to a side wall surface of the post body 2 facing the accommodating cavity 1A, so that the entire conductive portion 72 is located on a side of the third accommodating groove 213 close to the accommodating cavity 1A, and each communication hole 22 may serve as the liquid filling hole 31. Thus, when the electrolyte enters the third accommodating groove 213, the electrolyte does not contact the connecting portion (such as the weld mark) between the conductive portion 72 and the post body 2, so that the contamination and corrosion of the connecting portion between the conductive portion 72 and the post body 2 caused by the injected electrolyte can be reduced.

Exemplarily, when the post body 2 is provided with the fourth accommodating groove 214, as shown in FIG. 14, the conductive portion 72 may not pass through the communication hole 22 to be entirely located on a side of the third accommodating groove 213 close to the accommodating cavity 1A, for example, the conductive portion 72 is connected to a side wall surface of the post body 2 facing the accommodating cavity 1A, so that the conductive portion 72 is connected to a side groove wall of the fourth accommodating groove 214 away from the accommodating cavity 1A (for example, a top groove wall of the fourth accommodating groove 214). In this case, at least part of the conductive portion 72 may be accommodated in the fourth accommodating groove 214, thereby reducing the space occupied by the conductive portion 72 in the accommodating cavity 1A, saving the space in the accommodating cavity 1A to accommodate the active material coating portion 71 with a larger volume, and increasing the energy density of the battery cell 102, or reducing the size of the battery cell 102 in the case where the energy density of the battery cell 102 is unchanged.

Moreover, when the post body 2 is provided with the fourth accommodating groove 214, and the conductive portion 72 is connected to a side wall surface of the post body 2 facing the accommodating cavity 1A, each communication hole 22 may serve as the liquid filling hole 31. Thus, when the electrolyte enters the third accommodating groove 213, the electrolyte does not contact the connecting portion (such as the weld mark) between the conductive portion 72 and the post body 2 in the fourth accommodating groove 214, so that the contamination and corrosion of the connecting portion between the conductive portion 72 and the post body 2 caused by the injected electrolyte can be reduced.

In some embodiments, referring to FIG. 14, the post structure 1020 further includes a post cover plate 3, where the post cover plate 3 covers the post body 2 and seals the groove opening of the third accommodating groove 213. In this way, after liquid filling, the post cover plate 3 can be used to cover the post body 2, so that the groove opening of the third accommodating groove 213 in the post body 2 is sealed with the post cover plate 3. Consequently, the third accommodating groove 213 is in a sealed state, the electrolyte is prevented from overflowing, and external foreign matter is prevented from entering the battery cell 102, thereby improving the reliability of the battery cell 102. It is worth noting that the post cover plate 3 is a non-porous cover plate, thereby ensuring the reliability of sealing. In addition, it is to be noted that the post cover plate 3 is not restricted in material, and may be a component made of a single material, such as an aluminum cover plate, or may be a component made of a composite material, such as a copper-aluminum composite cover plate, which will not be repeated herein.

Moreover, since the liquid filling hole 31 penetrates through a side groove wall of the third accommodating groove 213 close to the accommodating cavity 1A. In this case, the third accommodating groove 213 is equivalent to a recessed structure, so that the liquid filling hole 31 is away from the groove opening of the third accommodating groove 213, and the liquid filling hole 31 is relatively far away from a joint between the post cover plate 3 and the post body 2. When the electrolyte overflows from the liquid filling hole 31, the overflowing electrolyte is less likely to contact the joint (such as a welded joint or a bonded joint) between the post cover plate 3 and the post body 2, which can reduce the corrosion and contamination of the joint, etc.

In some embodiments of the present application, the post body 2 may not be provided with the third accommodating groove 213. For example, referring to FIG. 13, the accommodating groove 21 may include a fifth accommodating groove 215 with a groove opening that is open in a direction of the accommodating cavity 1A, where the liquid filling hole 31 penetrates through a side groove wall of the fifth accommodating groove 215 away from the accommodating cavity 1A. In this way, when the electrolyte is injected into the battery cell 102, the electrolyte injected from the outer side of the post body 2 enters the fifth accommodating groove 215 through the liquid filling hole 31 and then flows toward the accommodating cavity 1A through the groove opening of the fifth accommodating groove 215.

Thus, the fifth accommodating groove 215 can play a role in buffering the electrolyte, and the side wall of the fifth accommodating groove 215 can block the electrolyte from splashing, which facilitates rapid liquid filling. Moreover, the height of the liquid filling hole 31 can be increased. When the liquid filling hole 31 is sealed, the gas generated in the accommodating cavity 1A or the electrolyte can enter the fifth accommodating groove 215. The fifth accommodating groove 215 can play a buffering role to improve the working reliability of the battery cell 102. In addition, when the liquid filling hole 31 is sealed with a relatively long sealing nail, since the liquid filling hole 31 is relatively high and the sealing nail protrudes from a lower end of the liquid filling hole 31 by a short length or does not protrude from the lower end of the liquid filling hole 31, the sealing nail is less likely to interfere with the battery core assembly 7 in the accommodating cavity 1A, or it is not necessary to thicken the lower plastic structure below the post body 2 in order to prevent the sealing nail from interfering with the battery core assembly 7. Consequently, the lower plastic structure can be thinned to reduce the material cost, and the space occupied by the lower plastic structure in the accommodating cavity 1A can be reduced to increase the energy density of the battery cell 102.

It is worth noting that the protruding structure 8 according to the embodiments of the present application is not limited to the post structure 1020, and therefore, the liquid filling hole 31 is not limited to being formed only in the post structure 1020. For example, in some embodiments, as shown in FIG. 17, the protruding structure 8 includes a pressure relief structure 1025, where the pressure relief structure 1025 is disposed on the first housing wall 11, a weak region is provided on the pressure relief structure 1025 and/or at a joint between the pressure relief structure 1025 and the first housing wall 11, and the liquid filling hole 31 is formed in the pressure relief structure 1025. For example, the weak region may be a thinned region, a notch, or the like. When the pressure in the accommodating cavity 1A exceeds a threshold, the weak region can be preferentially broken through, so that the housing 1 can achieve directional pressure relief, thereby improving the reliability of the battery cell 102. It is worth noting that the pressure relief structure 1025 and the first housing wall 11 may be integrally formed, or may be separately formed and assembled and connected, which is not limited herein.

In the above technical solution, the pressure relief structure 1025 is set to at least partially protrude from the outer surface 11a of the first housing wall 11, and the liquid filling hole 31 is formed in the pressure relief structure 1025, so that the liquid filling hole 31 can be prevented from separately occupying the space on the first housing wall 11, and when the post structure 1020 is disposed on the first housing wall 11, a large space can be saved to arrange the post structure 1020, which is beneficial to increasing the size of the post structure 1020. Moreover, there is no need to perform special processing on the first housing wall 11 to form the liquid filling hole 31 in the first housing wall 11, thereby reducing the structural complexity and processing difficulty of the first housing wall 11.

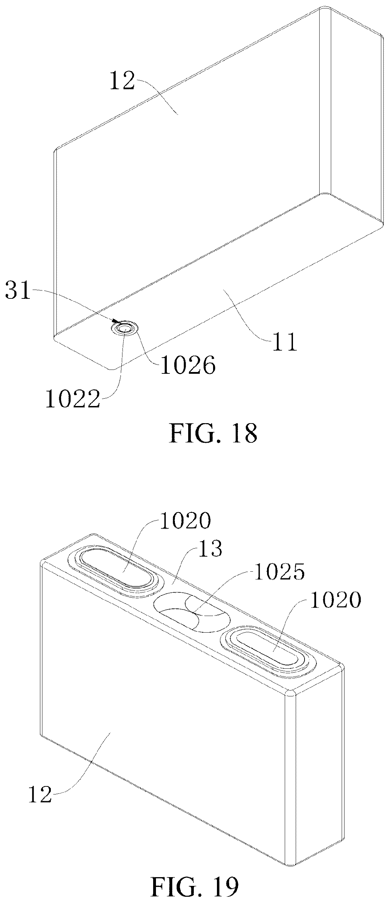

It is worth noting that the protruding structure 8 according to the embodiments of the present application is also not limited to the pressure relief structure 1025, and therefore, the liquid filling hole 31 is also not limited to being formed in the pressure relief structure 1025. For example, in some embodiments, as shown in FIG. 18 and FIG. 19, the protruding structure 8 includes a boss structure 1026, where the boss structure 1026 is integrally formed on the first housing wall 11, the housing 1 is provided with a post structure 1020 and a pressure relief structure 1025 that are spaced apart from the boss structure 1026, the boss structure 1026 is set to at least partially protrude from the outer surface 11a of the first housing wall 11, and the liquid filling hole 31 is formed in the boss structure 1026. It is worth noting that the shape, position, and the like of the boss structure 1026 are not limited. For example, when the first housing wall 11 is processed, a plate can be stamped, a protruding part can serve as the boss structure 1026, and another part is the first housing wall 11, so that the boss structure 1026 is conveniently obtained. In view of this, the liquid filling hole 31 is formed in the boss structure 1026 instead of the pressure relief structure 1025 and the post structure 1020, so that the processing difficulty of the pressure relief structure 1025 and the post structure 1020 can be lowered, and the processing cost of the pressure relief structure 1025 and the post structure 1020 can be reduced.

In some embodiments, as shown in FIG. 18 and FIG. 19, the housing 1 includes a third housing wall 13 disposed on a different side from the first housing wall 11, where the third housing wall 13 is provided with the post structure 1020 and/or the pressure relief structure 1025, that is, at least one of the post structure 1020 and the pressure relief structure 1025 is disposed on the third housing wall 13 not provided with the boss structure 1026, so that the boss structure 1026 can be prevented from occupying the space on the housing 1 for arranging the post structure 1020 and/or the pressure relief structure 1025, thereby increasing the size of the post structure 1020 and/or the pressure relief structure 1025.

It is worth noting that the shape and size of the liquid filling hole 31 are not limited and can be specifically selected according to actual situations.

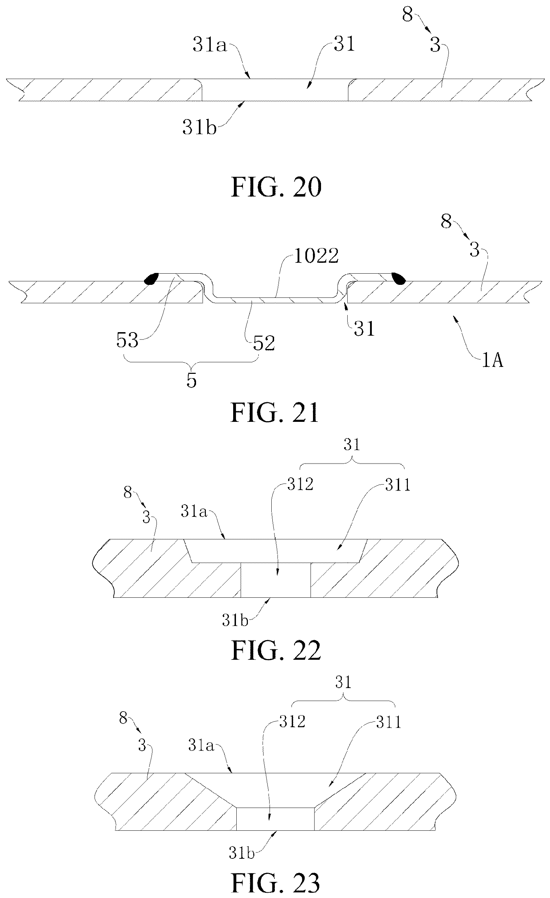

In some embodiments of the present application, as shown in FIG. 20 and FIG. 21, a current-carrying area of the outer hole end 31a of the liquid filling hole 31 is greater than a current-carrying area of the inner hole end 31b of the liquid filling hole 31. When the electrolyte is injected into the liquid filling hole 31, the electrolyte flows in a direction from the outer hole end 31a to the inner hole end 31b. The current-carrying area of the outer hole end 31a of the liquid filling hole 31 is set to be greater than the current-carrying area of the inner hole end 31b of the liquid filling hole 31, which facilitates the fit between the liquid filling hole 31 and the liquid filling nozzle. For example, it facilitates the insertion of the liquid filling nozzle into the outer hole end 31a of the liquid filling hole 31, thereby reducing the probability of liquid leakage during injection of the electrolyte. Moreover, since the current-carrying area of the outer hole end 31a of the liquid filling hole 31 is relatively large, a sealing structure 1022 is conveniently mounted to seal the liquid filling hole 31.

In some embodiments of the present application, referring to FIG. 22 to FIG. 24, the liquid filling hole 31 includes a first hole segment 311 and a second hole segment 312. That is, in some embodiments, the liquid filling hole 31 includes at least a first hole segment 311 and a second hole segment 312, where the first hole segment 311 is located upstream of the second hole segment 312 along a liquid filling circulation direction, a current-carrying area of the first hole segment 311 gradually decreases or remains unchanged along a direction from the first hole segment 311 to the second hole segment 312, a current-carrying area of the second hole segment 312 gradually decreases or remains unchanged along the direction from the first hole segment 311 to the second hole segment 312, and a current-carrying area of an outlet end of the first hole segment 311 is greater than or equal to a current-carrying area of an inlet end of the second hole segment 312, so that the current-carrying area of the outer hole end 31a of the liquid filling hole 31 can be greater than the current-carrying area of the inner hole end 31b of the liquid filling hole 31.

Thus, when the electrolyte is injected into the liquid filling hole 31, the electrolyte first flows through the first hole segment 311 and then flows through the second hole segment 312. Because the current-carrying area of the first hole segment 311 gradually decreases or remains unchanged along the direction from the first hole segment 311 to the second hole segment 312, the current-carrying area of the second hole segment 312 gradually decreases or remains unchanged along the direction from the first hole segment 311 to the second hole segment 312, and the current-carrying area of the outlet end of the first hole segment 311 is greater than or equal to the current-carrying area of the inlet end of the second hole segment 312, it indicates that the current-carrying area of the first hole segment 311 is relatively large, so that it is convenient for the first hole segment 311 to fit with the liquid filling nozzle. Moreover, the first hole segment 311 can play a role in buffering the electrolyte, which is beneficial to improving the liquid filling efficiency and reducing the risk of electrolyte splashing or overflowing, and facilitates the assembly of the sealing structure 1022 in the liquid filling hole 31 to achieve reliable sealing of the liquid filling hole 31 after liquid filling.

In some embodiments of the present application, referring to FIG. 23, the liquid filling hole 31 is composed of a first hole segment 311 and a second hole segment 312, that is, the liquid filling hole 31 includes only the first hole segment 311 and the second hole segment 312, the inlet end of the first hole segment 311 forms the outer hole end 31a of the liquid filling hole 31, the outlet end of the second hole segment 312 forms the inner hole end 31b of the liquid filling hole 31, the current-carrying area of the first hole segment 311 gradually decreases along the direction from the first hole segment 311 to the second hole segment 312, and the current-carrying area of the outlet end of the first hole segment 311 is equal to the current-carrying area of the inlet end of the second hole segment 312.

Thus, the liquid filling hole 31 has two segments, and the first hole segment 311 is substantially in a funnel shape. A side wall of the first hole segment 311 may have a flow guiding effect, so that the electrolyte entering the first hole segment 311 can quickly flow in a direction of the second hole segment 312, thereby improving the liquid filling efficiency. Moreover, since the current-carrying area of the outlet end of the first hole segment 311 is equal to the current-carrying area of the inlet end of the second hole segment 312, no step surface is formed between the first hole segment 311 and the second hole segment 312; and due to the funnel shape of the first hole segment 311, liquid does not easily accumulate in the first hole segment 311.

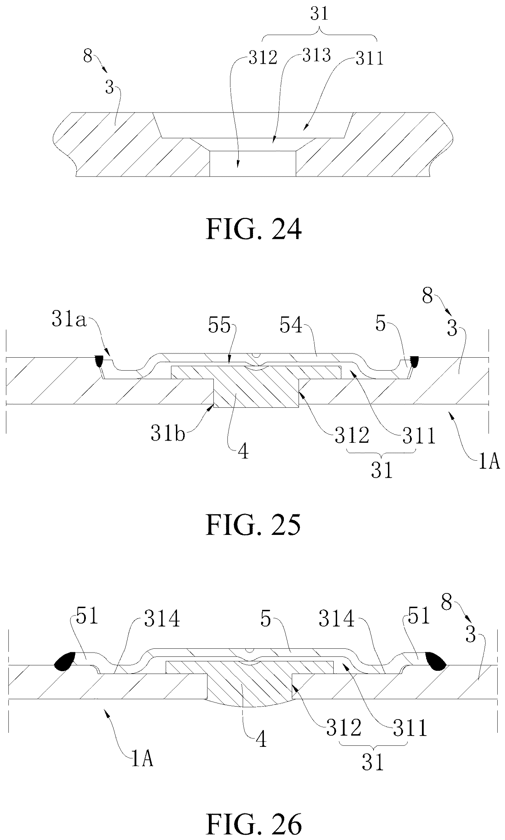

In some embodiments of the present application, referring to FIG. 24, the liquid filling hole 31 further includes a third hole segment 313, where the third hole segment 313 is located between the first hole segment 311 and the second hole segment 312 along the liquid filling circulation direction, a current-carrying area of the third hole segment 313 gradually decreases along the direction from the first hole segment 311 to the second hole segment 312, a current-carrying area of an inlet end of the third hole segment 313 is less than or equal to the current-carrying area of the outlet end of the first hole segment 311, and a current-carrying area of an outlet end of the third hole segment 313 is equal to the current-carrying area of the inlet end of the second hole segment 312.

Thus, when the electrolyte is injected into the liquid filling hole 31, the electrolyte first flows through the first hole segment 311, then flows through the third hole segment 313, and then flows through the second hole segment 312. The current-carrying area of the inlet end of the third hole segment 313 is less than or equal to the current-carrying area of the outlet end of the first hole segment 311, which indicates that the current-carrying area of the first hole segment 311 is relatively large, so that it is convenient for the first hole segment 311 to fit with the liquid filling nozzle. Moreover, the first hole segment 311 can play a role in buffering the electrolyte, which is beneficial to improving the liquid filling efficiency and reducing the risk of electrolyte splashing or overflowing, and facilitates the assembly of the sealing structure 1022 in the liquid filling hole 31 to achieve reliable sealing of the liquid filling hole 31 after liquid filling. Moreover, the current-carrying area of the third hole segment 313 gradually decreases along the direction from the first hole segment 311 to the second hole segment 312, the third hole segment 313 is substantially in a funnel shape, and a side wall of the third hole segment 313 may have a flow guiding effect, so that the electrolyte entering the third hole segment 313 can quickly flow in the direction of the second hole segment 312, thereby improving the liquid filling efficiency. In addition, since the current-carrying area of the outlet end of the third hole segment 313 is equal to the current-carrying area of the inlet end of the second hole segment 312, no step surface is formed between the third hole segment 313 and the second hole segment 312; and due to the funnel shape of the third hole segment 313, liquid does not easily accumulate in the third hole segment 313.

In some embodiments of the present application, referring to FIG. 20 and FIG. 21, after liquid filling, the sealing structure 1022 can be disposed at the liquid filling hole 31 to ensure the sealing performance of the liquid filling hole 31. For example, in some embodiments of the present application, the sealing structure 1022 can be set to fit with the protruding structure 8 to seal the liquid filling hole 31, so that the sealing performance of the liquid filling hole 31 is ensured, the electrolyte is prevented from overflowing, and the external foreign matter is prevented from entering the accommodating cavity 1A from the liquid filling hole 31, thereby improving the reliability of the battery cell 102.

In some embodiments, as shown in FIG. 21, the protruding structure 8 does not have a portion stopping on the outer side (i.e., a side away from the accommodating cavity 1A) of the sealing structure 1022, so that the sealing structure 1022 is adaptively mounted on the protruding structure 8 from the outer side (i.e., a side away from the accommodating cavity 1A) of the protruding structure 8. In this way, the sealing structure 1022 is set to be mounted on the protruding structure 8 from the outer side of the protruding structure 8 to seal the liquid filling hole 31, so that the sealing structure 1022 is remounted after liquid filling, which can ensure the sealing performance of the liquid filling hole 31; and the mounting position is close to the outer side, which facilitates rapid assembly of the sealing structure 1022.

The sealing structure 1022 may be in a detachable form or a non-detachable fixed form. Exemplarily, when the sealing structure 1022 is in the detachable form, the liquid filling hole 31 is conveniently maintained. For example, when the electrolyte needs to be replenished, the sealing structure 1022 can be disassembled, the liquid filling hole 31 is opened, the electrolyte is replenished and injected into the accommodating cavity 1A through the liquid filling hole 31, and then the sealing structure 1022 is reassembled. For example, the sealing structure 1022 can be detachably connected to the protruding structure 8 by means of a thread, a screw fastener, or the like, thereby facilitating disassembly and assembly. Exemplarily, as shown in FIG. 21, when the sealing structure 1022 is in the non-detachable fixed form, the sealing structure 1022 can be fixed to the protruding structure 8 by means of welding, riveting, or the like, thereby improving the sealing reliability of the sealing structure 1022 for the liquid filling hole 31.

In some embodiments of the present application, as shown in FIG. 21, at least part of the sealing structure 1022 is embedded in the liquid filling hole 31. That is, the sealing structure 1022 may be entirely embedded in the liquid filling hole 31, or only a part of the sealing structure 1022 may be embedded in the liquid filling hole 31. Thus, on the one hand, the space in the liquid filling hole 31 can be fully utilized to improve the sealing reliability of the sealing structure 1022 for the liquid filling hole 31, and on the other hand, the height of the sealing structure 1022 protruding out of the liquid filling hole 31 can be decreased, and the space occupied by the sealing structure 1022 outside the protruding structure 8 can be reduced, which is beneficial to reducing the overall size of the battery cell 102.

In some embodiments of the present application, as shown in FIG. 25, the sealing structure 1022 may include a first sealing member 4, where at least part of the first sealing member 4 is embedded in the liquid filling hole 31 and is in interference fit with the liquid filling hole 31 to seal the liquid filling hole 31. Thus, the first sealing member 4 is fixed by means of interference fit, which is beneficial to rapid mounting of the first sealing member 4 and to the improvement of the sealing reliability of the first sealing member 4 for the liquid filling hole 31.

In some embodiments of the present application, as shown in FIG. 25, the sealing structure 1022 may include a second sealing member 5, where the second sealing member 5 covers the outer hole end 31a of the liquid filling hole 31 and is hermetically connected to the protruding structure 8. Specifically, the statement where the second sealing member 5 covers the outer hole end 31a of the liquid filling hole 31 is broadly understood, and the second sealing member 5 may cover the outer side of the outer hole end 31a, or may be embedded inside the outer hole end 31a, as long as it is located near the outer hole end 31a and covers the outer hole end 31a. Thus, sealing can be implemented from the source (i.e., the outer hole end 31a) of the liquid filling hole 31, thereby reducing the probability of foreign matter contaminating the liquid filling hole 31; and the second sealing member 5 covers the outer hole end 31a of the liquid filling hole 31, which facilitates rapid assembly of the second sealing member 5 and improves the assembly efficiency of the second sealing member 5.

Specifically, the manner of fit between the second sealing member 5 and the protruding structure 8 is not limited. For example, in some embodiments, as shown in FIG. 25 and FIG. 26, an edge of the second sealing member 5 can lap outside the protruding structure 8 (that is, the edge of the second sealing member 5 laps on a side of the protruding structure 8 away from the accommodating cavity 1A) and/or at least part of the second sealing member 5 is embedded in the liquid filling hole 31, and the second sealing member 5 is in welded seal fit with the protruding structure 8. Thus, the assembly and positioning of the second sealing member 5 are facilitated by means of lapping and/or embedding, and the sealing connection between the second sealing member 5 and the protruding structure 8 is achieved by means of welding, which can improve the reliability of the sealing connection between the second sealing member 5 and the protruding structure 8.

In some embodiments, as shown in FIG. 25 and FIG. 26, the liquid filling hole 31 includes a first hole segment 311 and a second hole segment 312 sequentially disposed along the liquid filling circulation direction, where a hole diameter of the first hole segment 311 is greater than a hole diameter of the second hole segment 312, that is, a current-carrying area of any section of the first hole segment 311 is greater than a current-carrying area of any section of the second hole segment 312, and at least part of the second sealing member 5 is embedded in the first hole segment 311 and covers the second hole segment 312. It is worth noting that the shape of the liquid filling hole 31 in this embodiment may be further selected from any of the above embodiments, for example, the current-carrying area of the first hole segment 311 gradually decreases or remains unchanged along the direction from the first hole segment 311 to the second hole segment 312, and the current-carrying area of the second hole segment 312 gradually decreases or remains unchanged along the direction from the first hole segment 311 to the second hole segment 312, etc.

In the above technical solution, since the part of the second sealing member 5 embedded in the first hole segment 311 can cover the second hole segment 312, reliable sealing of the liquid filling hole 31 can be achieved. Moreover, since the hole diameter of the first hole segment 311 is relatively large, at least part of the second sealing member 5 is embedded in the first hole segment 311, which facilitates the assembly and positioning of the second sealing member 5, is beneficial to omitting a positioning fixture and the like used for connection, and facilitates the connection between the second sealing member 5 and the protruding structure 8. Moreover, the space occupied by the second sealing member 5 outside the protruding structure 8 can be reduced, which is beneficial to reducing the overall size of the battery cell 102.

It is to be noted that the cross section of the liquid filling hole 31 may be circular but is not limited thereto, and may also be in other shapes, such as polygonal, elliptical, and oblong. In addition, when the liquid filling hole 31 is in a multi-segment form, the cross section of each segment of the liquid filling hole 31 may be circular, or the cross section of at least one segment of the liquid filling hole is not circular. The hole diameter of the hole segment with the non-circular cross section can be understood as an equivalent diameter of the corresponding hole segment.

In some embodiments, as shown in FIG. 25, the edge of the second sealing member 5 is hermetically connected to the hole wall of the first hole segment 311. In the above technical solution, the edge of the second sealing member 5 is hermetically connected to the hole wall of the first hole segment 311, which indicates that the second sealing member 5 can be completely accommodated in the first hole segment 311 in a radial direction of the first hole segment 311, so that the space occupied by the second sealing member 5 outside the protruding structure 8 can be further reduced, and the tightness of fit between the second sealing member 5 and the protruding structure 8 can be improved; and the stability and reliability of connection between the second sealing member 5 and the protruding structure 8 can be improved by means of the stopping limit of the hole wall of the first hole segment 311 to the edge of the second sealing member 5. Exemplarily, the second sealing member 5 may be further fully recessed into the first hole segment 311 in an axial direction of the first hole segment 311, which is beneficial to further reducing the space occupied by the second sealing member 5 outside the protruding structure 8.

In some embodiments, as shown in FIG. 26, the second sealing member 5 includes an extension portion 51, where the extension portion 51 extends out of the first hole segment 311, and laps on and is hermetically connected to a side wall surface of the protruding structure 8 away from the accommodating cavity 1A. Thus, the size of the extension portion 51 in the radial direction of the first hole segment 311 can be increased as required to increase the area of sealing connection between the second sealing member 5 and the protruding structure 8, thereby improving the reliability of sealing connection between the second sealing member 5 and the protruding structure 8. Moreover, the shape of the first hole segment 311 is less required, and the edge of the second sealing member 5 and the hole wall of the first hole segment 311 do not need to be set to match in shape and be in clearance fit that meets the requirements, thereby reducing the processing accuracy of the protruding structure 8 and the second sealing member 5, improving the production efficiency, and lowering the production cost.

In some embodiments, as shown in FIG. 25 and FIG. 26, the liquid filling hole 31 forms a step surface 314 at a joint between the first hole segment 311 and the second hole segment 312, and the part of the second sealing member 5 embedded in the first hole segment 311 is supported on the step surface 314. Thus, the stability of connection between the second sealing member 5 and the protruding structure 8 can be improved.

In some embodiments, the sealing structure 1022 further includes a first sealing member 4, where the first sealing member 4 is in interference seal fit with the second hole segment 312 and is located on a side of the second sealing member 5 close to the accommodating cavity 1A. In the above technical solution, the sealing structure 1022 includes both the first sealing member 4 and the second sealing member 5. The second sealing member 5 can play a role in preventing the first sealing member 4 from coming out of the liquid filling hole 31, so that the reliability of the seal fit between the first sealing member 4 and the second hole segment 312 can be improved, thereby improving the sealing reliability of the sealing structure 1022 as a whole for the liquid filling hole 31. In addition, the first sealing member 4 is fixed by means of interference fit, thereby facilitating rapid mounting of the first sealing member 4.

In addition, when the first hole segment 311 is configured in the form that the current-carrying area of the first hole segment 311 gradually decreases or remains unchanged along the direction from the first hole segment 311 to the second hole segment 312 and the current-carrying area of the outlet end of the first hole segment 311 is greater than or equal to the current-carrying area of the inlet end of the second hole segment 312, the assembly connection of the second sealing member 5 is facilitated.

In some embodiments, as shown in FIG. 25 and FIG. 26, the second sealing member 5 includes an avoidance portion 54 protruding in a direction away from the first sealing member 4, where an avoidance cavity 55 is formed in a side of the avoidance portion 54 facing the first sealing member 4, and a part of the first sealing member 4 extends into the avoidance cavity 55. In the above technical solution, the tightness of fit between the first sealing member 4 and the second sealing member 5 can be improved, the occupation and waste of space can be reduced, and the volume of the battery cell 102 can be reduced. Moreover, the second sealing member 5 is in a concave-convex form, which can enhance the structural strength of the second sealing member 5 and improve the reliability and stability of fit between the second sealing member 5 and the protruding structure 8.

In some embodiments of the present application, as shown in FIG. 25 and FIG. 26, the sealing structure 1022 includes both the first sealing member 4 and the second sealing member 5, where at least part of the first sealing member 4 is embedded in the liquid filling hole 31 and is in interference fit with the liquid filling hole 31 to seal the liquid filling hole 31, the edge of the second sealing member 5 laps outside the protruding structure 8 (referring to FIG. 26, that is, the edge of the second sealing member 5 laps on a side of the protruding structure 8 away from the accommodating cavity 1A) and/or at least part of the second sealing member 5 is embedded in the liquid filling hole 31 (referring to FIG. 25 and FIG. 26), the second sealing member 5 is in welded seal fit with the protruding structure 8, and the second sealing member 5 is located on a side of the first sealing member 4 away from the accommodating cavity 1A. Thus, the first sealing member 4 can effectively seal the liquid filling hole 31, and the second sealing member 5 can not only seal the liquid filling hole 31, but also prevent the first sealing member 4 from coming out of the liquid filling hole 31, thereby improving the sealing reliability of the sealing structure 1022 for the liquid filling hole 31.

Exemplarily, the first sealing member 4 may be made of plastic, rubber, or the like, which is beneficial to the interference fit and improves the sealing effect.

Exemplarily, the second sealing member 5 may be made of the same metal material as the protruding structure 8, for example, may be made of aluminum, which is beneficial to improving the welding yield of the second sealing member 5 and the protruding structure 8. In addition, it is worth noting that the manner of welding between the second sealing member 5 and the protruding structure 8 is not limited. For example, thermal fusion welding or brazing may be employed. Exemplarily, pulse laser welding may be employed, which improves the manufacturing efficiency and the degree of automation.

It is worth noting that laser welding has high requirements for the cleanliness of the liquid filling hole 31. If there is residual electrolyte in the liquid filling hole 31, the electrolyte is easily gasified when heated, and exhaust gas generated in the gasification rushes out of a welding pool, resulting in defects such as pinholes and explosion points at the welding joint. The liquid filling hole is configured in such a way that the liquid filling hole 31 is composed of the first hole segment 311 and the second hole segment 312, where the current-carrying area of the first hole segment 311 gradually decreases along the direction from the first hole segment 311 to the second hole segment 312, and the current-carrying area of the outlet end of the first hole segment 311 is equal to the current-carrying area of the inlet end of the second hole segment 312; or the liquid filling hole 31 further includes the third hole segment 313, where the third hole segment 313 is located between the first hole segment 311 and the second hole segment 312 along the liquid filling circulation direction, the current-carrying area of the third hole segment 313 gradually decreases along the direction from the first hole segment 311 to the second hole segment 312, the current-carrying area of the inlet end of the third hole segment 313 is less than or equal to the current-carrying area of the outlet end of the first hole segment 311, and the current-carrying area of the outlet end of the third hole segment 313 is equal to the current-carrying area of the inlet end of the second hole segment 312. Since the liquid accumulation problem of the liquid filling hole 31 can be improved, the welding yield of the second sealing member 5 and the protruding structure 8 can be increased, and the sealing performance can be improved.

In some embodiments of the present application, the electrolyte is injected from the liquid filling hole 31 of the protruding structure 8, and the electrolyte enters the housing 1 of the battery cell 102; and after the liquid filling is completed, the first sealing member 4 is first mounted in the liquid filling hole 31 to achieve pre-sealing, then the second sealing member 5 is mounted in the liquid filling hole 31, and then the second sealing member 5 and the protruding structure 8 are welded to achieve tight sealing. In addition, when the conductive portion 72 needs to pass through the first communication hole 221, the passage of the conductive portion 72 and the welding between the conductive portion 72 and the post body 2 are carried out first, and then the electrolyte is injected.

In some embodiments, as shown in FIG. 21, the second sealing member 5 may include a central portion 52 and an edge portion 53 surrounding the central portion 52, where the central portion 52 is embedded in the liquid filling hole 31, and the edge portion 53 laps on and is hermetically connected to a part, surrounding the liquid filling hole 31, of a side wall surface of the protruding structure 8 away from the accommodating cavity 1A. Thus, the shape of the liquid filling hole 31 is less required, and the protruding structure 8 does not need to be thickened in order to process the liquid filling hole 31 into a complex shape, so that the protruding structure 8 can be thinned. Moreover, the location fit between the second sealing member 5 and the protruding structure 8 is stable, which is beneficial to improving the stability and reliability of connection between the second sealing member 5 and the protruding structure 8; and the fit between the second sealing member 5 and the protruding structure 8 is tight, which is beneficial to saving space. In addition, the manner of lap joint and connection between the second sealing member 5 and the protruding structure 8 is beneficial to quick connection thereof.

It is worth noting that the sealing structure 1022 may include only the first sealing member 4, only the second sealing member 5, or both the first sealing member 4 and the second sealing member 5. In the above embodiments, when it is not described that the sealing structure 1022 includes both the first sealing member 4 and the second sealing member 5, whether to provide the first sealing member 4 alone or the second sealing member 5 alone, or to provide both the first sealing member 4 and the second sealing member 5 can be specifically selected according to needs, which is not limited herein.

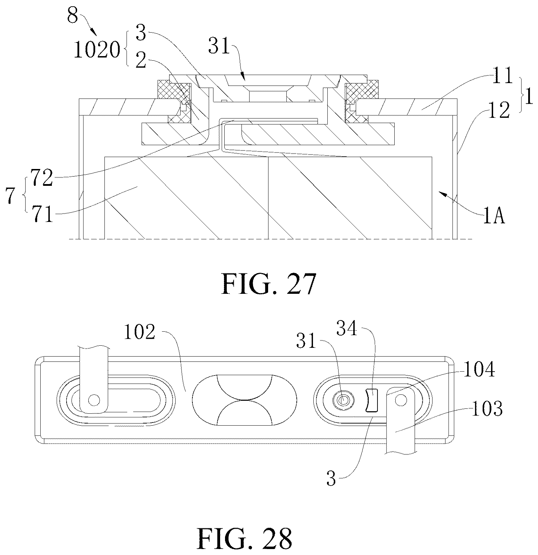

In some embodiments of the present application, as shown in FIG. 6, the first housing wall 11 and the at least one second housing wall 12 are integrally formed, and the second housing wall 12 extends toward a side of the first housing wall 11 in a thickness direction. Alternatively, as shown in FIG. 27, the first housing wall 11 is an integrally formed cover plate. Thus, flexible design of the position of the protruding structure 8 can be achieved, thereby extending the application range of the battery cell 102 in the embodiments of the present application.

It is worth noting that the second housing wall 12 may extend from an edge of the first housing wall 11, and when the first housing wall 11 is rectangular, at least one of four edges of the first housing wall 11 may extend out of the second housing wall 12, for example, only one edge of the first housing wall 11 extends out of the second housing wall 12, only two edges of the first housing wall 11 may extend out of the second housing wall 12 separately, three edges of the first housing wall 11 may extend out of the second housing wall 12 separately, or all the four edges of the first housing wall 11 may extend out of the second housing wall 12. Exemplarily, when the housing 1 is a rectangular housing, any wall surface of the rectangular housing may serve as the first housing wall 11.

For example, the housing 1 may include a housing body and a cover plate. The housing body defines a space with an open side, and the cover plate is disposed on the open side of the housing body to form the accommodating cavity 1A between the housing body and the cover plate. In this case, a side wall surface of the housing body opposite to the cover plate is the first housing wall 11, and a wall surface of the housing body connected between the first housing wall 11 and the cover plate is the second housing wall 12; or a side wall surface of the housing body opposite to the cover plate is the second housing wall 12, and a wall surface of the housing body connected between the second housing wall 12 and the cover plate is the first housing wall 11; or the cover plate is the first housing wall 11.

According to some embodiments of the present application, referring to FIG. 2 and FIG. 28, further provided in the present application is a battery 100, including a busbar component 103 and a plurality of battery cells 102 according to any one of the above solutions, where at least two of the plurality of battery cells 102 are electrically connected via the busbar component 103. Thus, a series connection and/or a parallel connection of the plurality of battery cells 102 can be achieved. Both the performance and manufacturability of the battery cell 102 according to the embodiments of the present application are improved, thereby helping improve the performance and manufacturability of the battery 100. It is worth noting that the battery 100 according to the embodiments of the present application may include a box 101, or may not include the box 101.

For example, when the plurality of battery cells 102 are connected in series, the post cover plate 3 of the positive electrode of one battery cell 102 is connected to the post cover plate 3 of the negative electrode of the next battery cell 102 through one busbar component 103, and the post cover plate 3 of the negative electrode of the battery cell 102 is connected to the post cover plate 3 of the positive electrode of the previous battery cell 102 through another busbar component 103.

In some embodiments, as shown in FIG. 28, when the protruding structure 8 includes the post structure 1020, the post structure 1020 includes the post body 2 and the post cover plate 3, and the liquid filling hole 31 is formed in the post cover plate 3, the busbar component 103 is connected to a side surface of the post cover plate 3 away from the accommodating cavity 1A to form a second connecting portion 104 (for example, a weld mark is formed by means of welding), and the liquid filling hole 31 is offset from the second connecting portion 104, that is, the liquid filling hole 31 does not overlap with the second connecting portion 104. Thus, when the electrolyte overflows from the liquid filling hole 31, the contamination and corrosion of the second connecting portion 104 caused by the electrolyte can be reduced, and the influence of the sealing structure 1022 covering the liquid filling hole 31 on the connection between the busbar component 103 and the post cover plate 3 can be avoided, thereby improving the convenience and reliability of connection between the busbar component 103 and the post cover plate 3.

In some embodiments, as shown in FIG. 28, a boundary portion 34 is formed on a side surface of the post cover plate 3 away from the accommodating cavity 1A, and the boundary portion 34 is located between the second connecting portion 104 and the liquid filling hole 31. It is worth noting that the boundary portion 34 is the recessed structure or the protruding structure 8, and when the electrolyte overflows from the liquid filling hole 31, the electrolyte can be blocked by the boundary portion 34, for example, the electrolyte can be accumulated in the recessed structure or blocked by the protruding structure 8 to reduce the probability that the electrolyte contacts the second connecting portion 104, thereby reducing the contamination and corrosion of the second connecting portion 104 caused by the electrolyte. Moreover, the boundary portion 34 can play a role in identification, so that a joint between the busbar component 103 and the post cover plate 3 can be away from the liquid filling hole 31, thereby further reducing the situation where the electrolyte overflowing from the liquid filling hole 31 contacts the second connecting portion 104. It is worth noting that the shape and size of the boundary portion 34 are not limited, as long as the liquid filling hole 31 can be blocked to a certain extent.

In a third aspect, further provided in the embodiments of the present application is an electric device, including the battery 100 according to any one of the above solutions.

According to some embodiments of the present application, further provided in the present application is an electric device, including the battery 100 according to any one of the above solutions, where the battery 100 is configured to provide electric energy for the electric device. The electric device may be any one of the above devices or systems using the battery 100. Since the performance of the battery 100 is improved, the working electrical performance of the electric device can be improved.

Hereinafter, a battery cell 102 according to a specific embodiment of the present application is described.

Referring to FIG. 4 to FIG. 6, the battery cell 102 includes a housing 1 and a battery core assembly 7, where the housing 1 defines an accommodating cavity 1A, the housing 1 is provided with a post structure 1020 and a pressure relief structure 1025, the battery core assembly 7 includes an active material coating portion 71 and a conductive portion 72, the active material coating portion 71 is accommodated in the accommodating cavity 1A, and the conductive portion 72 connects the active material coating portion 71 to the post structure 1020. The housing 1 includes a first housing wall 11, where a side surface of the first housing wall 11 facing the accommodating cavity 1A is an inner surface 11b, a side surface of the first housing wall 11 away from the accommodating cavity 1A is an outer surface 11a, the post structure 1020 is disposed on the first housing wall 11, and at least part of the post structure 1020 protrudes to a side of the outer surface 11a of the first housing wall 11 away from the accommodating cavity 1A.

Referring to FIG. 4 to FIG. 6, the post structure 1020 includes a post body 2 and a post cover plate 3, where the post body 2 is disposed on the first housing wall 11, the post cover plate 3 covers the post body 2, a communication channel 2A communicating with the accommodating cavity 1A is formed in the post body 2, a liquid filling hole 31 is formed in the post cover plate 3, and the liquid filling hole 31 communicates with the communication channel 2A. Two ends of the liquid filling hole 31 are an outer hole end 31a and an inner hole end 31b respectively, the outer hole end 31a and the inner hole end 31b are sequentially disposed along a direction from the outer surface 11a to the inner surface 11b of the first housing wall 11, and the inner hole end 31b is located on an outer side (i.e., a side away from the accommodating cavity 1A) of the inner surface 11b of the first housing wall 11.

Referring to FIG. 4 to FIG. 6, the post body 2 is provided with a first accommodating groove 211 and a communication hole 22, the first accommodating groove 211 is open in a direction of the post cover plate 3 to communicate with the liquid filling hole 31, the communication hole 22 penetrates through a groove wall of the first accommodating groove 211 and communicates the first accommodating groove 211 with the accommodating cavity 1A, the conductive portion 72 passes through at least one communication hole 22 to be at least partially accommodated in the first accommodating groove 211, there are one or more communication holes 22, at least one communication hole 22 serves as a liquid passing hole 23, and the communication channel 2A includes the first accommodating groove 211 and the liquid passing hole 23.

Referring to FIG. 25, the liquid filling hole 31 includes a first hole segment 311 and a second hole segment 312, where the first hole segment 311 is located upstream of the second hole segment 312 along a liquid filling circulation direction, a current-carrying area of the first hole segment 311 gradually decreases along a direction from the first hole segment 311 to the second hole segment 312, a current-carrying area of the second hole segment 312 remains unchanged along the direction from the first hole segment 311 to the second hole segment 312, and a current-carrying area of an outlet end of the first hole segment 311 is greater than a current-carrying area of an inlet end of the second hole segment 312. The battery cell 102 further includes a first sealing member 4 and a second sealing member 5, where at least part of the first sealing member 4 is embedded in the second hole segment 312 and is in interference fit with the second hole segment 312 for sealing, the second sealing member 5 is located on an outer side of the first sealing member 4 and covers the outer hole end 31a of the liquid filling hole 31, and an edge of the second sealing member 5 is welded and hermetically connected to the post cover plate 3.

When the battery cell 102 is manufactured, first, the conductive portion 72 passes through the communication hole 22 of the post body 2 to achieve welding between the conductive portion 72 and the post body 2; then, the post body 2 is covered with the post cover plate 3, the electrolyte is injected from the liquid filling hole 31 in the post cover plate 3, and the electrolyte enters the housing 1 through the communication channel 2A in the post body 2; and after the liquid filling is completed, the first sealing member 4 is first mounted in the liquid filling hole 31 to achieve pre-sealing, then the second sealing member 5 is mounted in the liquid filling hole 31, and then the second sealing member 5 and the post cover plate 3 are welded to achieve tight sealing.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A battery cell, comprising:
a housing, defining an accommodating cavity, wherein the housing comprises a first housing wall, a side surface of the first housing wall facing the accommodating cavity is an inner surface, and a side surface of the first housing wall away from the accommodating cavity is an outer surface; and
a protruding structure, disposed on the first housing wall and at least partially protruding to a side of the outer surface of the first housing wall away from the accommodating cavity, wherein a liquid filling hole is formed in the protruding structure, two ends of the liquid filling hole are an outer hole end and an inner hole end respectively, the outer hole end and the inner hole end are sequentially disposed along a direction from the outer surface to the inner surface of the first housing wall, and the inner hole end is located on a side of the inner surface of the first housing wall away from the accommodating cavity.

2. The battery cell according to claim 1, wherein the inner hole end is located on the side of the outer surface of the first housing wall away from the accommodating cavity.

3. The battery cell according to claim 1 or 2, wherein the protruding structure comprises:
a post structure, wherein the post structure is disposed on the first housing wall, and the liquid filling hole is formed in the post structure.

4. The battery cell according to claim 3, wherein the post structure comprises a post body and a post cover plate, the post body is disposed on the first housing wall, the post cover plate covers the post body, a communication channel communicating with the accommodating cavity is formed in the post body, and the liquid filling hole is formed in the post cover plate and communicates with the communication channel.

5. The battery cell according to claim 4, wherein the liquid filling hole is formed in a post cover plate of a negative electrode, and the post cover plate of the negative electrode and a post body of the negative electrode are made of a same material.

6. The battery cell according to claim 4, wherein the post cover plate comprises a first cover plate portion and a second cover plate portion, the first cover plate portion is connected to the post body, the first cover plate portion and the post body are made of a same material, the second cover plate portion is connected to the first cover plate portion, and the liquid filling hole is formed in the first cover plate portion or the second cover plate portion.

7. The battery cell according to any one of claims 4 to 6, wherein the communication channel comprises a first accommodating groove and a liquid passing hole, the first accommodating groove is open in a direction of the post cover plate to communicate with the liquid filling hole, and the liquid passing hole penetrates through a groove wall of the first accommodating groove and communicates the first accommodating groove with the accommodating cavity.

8. The battery cell according to claim 7, wherein a groove opening of the first accommodating groove is located on a side of the first accommodating groove away from the accommodating cavity, and the liquid passing hole is formed in a side of the first accommodating groove close to the accommodating cavity and penetrates through a side groove wall of the first accommodating groove close to the accommodating cavity.

9. The battery cell according to claim 7 or 8, wherein at least part of the post cover plate is embedded in the first accommodating groove.

10. The battery cell according to any one of claims 7 to 9, wherein an edge of the post cover plate is provided with a lap joint portion, and the lap joint portion laps on a side of the post body away from the accommodating cavity.

11. The battery cell according to any one of claims 7 to 9, wherein a side surface of the post body away from the accommodating cavity is provided with a recessed groove surrounding the first accommodating groove, an edge of the post cover plate is provided with a lap joint portion, and at least part of the lap joint portion is embedded in the recessed groove.

12. The battery cell according to any one of claims 7 to 11, wherein the communication channel further comprises a second accommodating groove, the second accommodating groove is located on a side of the first accommodating groove close to the accommodating cavity, the second accommodating groove is open in a direction of the accommodating cavity to communicate with the accommodating cavity, and the liquid passing hole penetrates through a groove wall of the second accommodating groove to communicate the first accommodating groove with the second accommodating groove.

13. The battery cell according to any one of claims 7 to 12, wherein the battery cell comprises a battery core assembly, the battery core assembly comprises an active material coating portion accommodated in the accommodating cavity and a conductive portion connected to the active material coating portion, a communication hole communicating the first accommodating groove with the accommodating cavity is formed in the post body, one or a plurality of communication holes are provided, at least one of the communication holes serves as the liquid passing hole, and the conductive portion passes through at least one of the communication holes to be at least partially accommodated in the first accommodating groove.

14. The battery cell according to claim 13, wherein the communication hole through which the conductive portion passes is a first communication hole, and at least the first communication hole serves as the liquid passing hole.

15. The battery cell according to claim 13, wherein the communication hole through which the conductive portion passes is a first communication hole, a plurality of communication holes are provided, at least one second communication hole through which the conductive portion does not pass is further comprised, and at least the second communication hole serves as the liquid passing hole.

16. The battery cell according to any one of claims 13 to 15, wherein a side groove wall of the first accommodating groove close to the accommodating cavity is a bottom groove wall, the conductive portion is connected to the bottom groove wall to form a first connecting portion, and an orthographic projection of the liquid filling hole on the bottom groove wall is offset from the first connecting portion.

17. The battery cell according to any one of claims 13 to 16, wherein the communication hole through which the conductive portion passes is a first communication hole, the post body is formed into an elongated structure, and the first communication hole is formed into an elongated hole with a length direction extending from one end to the other end of a length of the post body.

18. The battery cell according to claim 17, wherein the post cover plate is a long cover plate, and the liquid filling hole is eccentrically formed in a length direction of the post cover plate.

19. The battery cell according to any one of claims 7 to 12, wherein the battery cell comprises a battery core assembly, the battery core assembly comprises an active material coating portion accommodated in the accommodating cavity and a conductive portion connected to the active material coating portion, and the conductive portion is connected to a side wall surface of the post body facing the accommodating cavity.

20. The battery cell according to any one of claims 7 to 19, wherein the liquid filling hole is opposite to the liquid passing hole.

21. The battery cell according to claim 3, wherein the post structure comprises a post body, the post body is disposed on the first housing wall, the liquid filling hole is formed in the post body, and an accommodating groove communicating with the liquid filling hole is formed in the post body.

22. The battery cell according to claim 21, wherein the accommodating groove comprises a third accommodating groove with a groove opening that is open in a direction away from the accommodating cavity, and the liquid filling hole penetrates through a side groove wall of the third accommodating groove close to the accommodating cavity.

23. The battery cell according to claim 22, wherein the accommodating groove further comprises a fourth accommodating groove with a groove opening that is open in a direction of the accommodating cavity, the fourth accommodating groove is located on a side of the third accommodating groove close to the accommodating cavity, and the liquid filling hole penetrates through a side groove wall of the fourth accommodating groove away from the accommodating cavity to communicate the third accommodating groove with the fourth accommodating groove.

24. The battery cell according to claim 22 or 23, wherein the post structure further comprises a post cover plate, and the post cover plate covers the post body and seals the groove opening of the third accommodating groove.

25. The battery cell according to claim 21, wherein the accommodating groove comprises a fifth accommodating groove with a groove opening that is open in a direction of the accommodating cavity, and the liquid filling hole penetrates through a side groove wall of the fifth accommodating groove away from the accommodating cavity.

26. The battery cell according to claim 1 or 2, wherein the protruding structure comprises:
a pressure relief structure, wherein the pressure relief structure is disposed on the first housing wall, a weak region is provided on the pressure relief structure and/or at a joint between the pressure relief structure and the first housing wall, and the liquid filling hole is formed in the pressure relief structure.

27. The battery cell according to claim 1 or 2, wherein the protruding structure comprises:
a boss structure, wherein the boss structure is integrally formed on the first housing wall, the housing is provided with a post structure and a pressure relief structure that are spaced apart from the boss structure, and the liquid filling hole is formed in the boss structure.

28. The battery cell according to claim 27, wherein the housing comprises a third housing wall disposed on a different side from the first housing wall, and at least one of the post structure and the pressure relief structure is disposed on the third housing wall.

29. The battery cell according to any one of claims 1 to 28, wherein a current-carrying area of the outer hole end of the liquid filling hole is greater than a current-carrying area of the inner hole end of the liquid filling hole.

30. The battery cell according to any one of claims 1 to 29, wherein the liquid filling hole comprises a first hole segment and a second hole segment, the first hole segment is located upstream of the second hole segment along a liquid filling circulation direction, a current-carrying area of the first hole segment gradually decreases or remains unchanged along a direction from the first hole segment to the second hole segment, a current-carrying area of the second hole segment gradually decreases or remains unchanged along the direction from the first hole segment to the second hole segment, and a current-carrying area of an outlet end of the first hole segment is greater than or equal to a current-carrying area of an inlet end of the second hole segment.

31. The battery cell according to claim 30, wherein the liquid filling hole comprises the first hole segment and the second hole segment, the current-carrying area of the first hole segment gradually decreases along the direction from the first hole segment to the second hole segment, and the current-carrying area of the outlet end of the first hole segment is equal to the current-carrying area of the inlet end of the second hole segment.

32. The battery cell according to claim 30, wherein the liquid filling hole further comprises a third hole segment, the third hole segment is located between the first hole segment and the second hole segment along the liquid filling circulation direction, a current-carrying area of the third hole segment gradually decreases along the direction from the first hole segment to the second hole segment, a current-carrying area of an inlet end of the third hole segment is less than or equal to the current-carrying area of the outlet end of the first hole segment, and a current-carrying area of an outlet end of the third hole segment is equal to the current-carrying area of the inlet end of the second hole segment.

33. The battery cell according to any one of claims 1 to 32, further comprising
a sealing structure, wherein the sealing structure fits with the protruding structure and seals the liquid filling hole.

34. The battery cell according to claim 33, wherein the sealing structure comprises:
a first sealing member, at least part of the first sealing member being embedded in the liquid filling hole and being in interference fit with the liquid filling hole for sealing; and/or
a second sealing member, the second sealing member covering the outer hole end of the liquid filling hole and hermetically connected to the protruding structure.

35. The battery cell according to any one of claims 1 to 34, wherein the first housing wall is an integrally formed cover plate, or the first housing wall is integrally formed with at least one second housing wall, and the second housing wall extends toward a side of the first housing wall in a thickness direction.

36. A battery, comprising a busbar component and a plurality of battery cells according to any one of claims 1 to 35, wherein at least two of the battery cells are electrically connected via the busbar component.

37. An electric device, comprising the battery according to claim 36.
